Europäisches Patentamt

European Patent Office

Office européen des brevets

(19)

(11) EP 1 672 916 A1

(12) EUROPEAN PATENT APPLICATION
published in accordance with Art. 158(3) EPC

(43) Date of publication:
21.06.2006 Bulletin 2006/25

(51) Int Cl.:
*H04N 5/235* (1985.01)

(21) Application number: 04772835.7

(22) Date of filing: 30.08.2004

(86) International application number:
PCT/JP2004/012886

(87) International publication number:
WO 2005/027510 (24.03.2005 Gazette 2005/12)

(84) Designated Contracting States:
DE FR GB

(30) Priority: 10.09.2003 JP 2003318017

(71) Applicant: MATSUSHITA ELECTRIC INDUSTRIAL
CO., LTD.
Kadoma-shi, Osaka 571-8501 (JP)

(72) Inventors:
• MORIYA, Osafumi
Osaka 570-0002 (JP)

• YANASE, Aya
Osaka 565-0801 (JP)
• MINO, Mineo
Osaka 573-0071 (JP)

(74) Representative: Grünecker, Kinkeldey,
Stockmair & Schwanhäusser
Anwaltssozietät
Maximilianstrasse 58
80538 München (DE)

(54) **IMAGE PROCESSING DEVICE**

(57) An image processing device for automatically setting the accumulation time (exposure time) in accordance with the illuminance even in a dark environment and smoothly following the motion of an object. The image processing device includes: gain control means (7) for performing gain control of a video signal from an imaging element (6) which focuses a signal from an iris (2) controlling the light quantity of the optical signal coming from outside and outputs a video signal; signal process-ing means (9) for signal-processing an output signal from the gain control means (7); and imaging control means (25) for controlling the opening degree of the iris (2), the exposure time of the imaging element (6), and the gain amount of the gain control means according to the video signal from the signal processing means (9). The imaging control means (25) judges the brightness around accord-ing to the video signal from the signal processing means (9) when it is dark around and changes the exposure time of the imaging element (6).

FIG. 1

**Description**

Technical Field

The present invention relates to an image processing device of a video camera or the like capable of capturing a clear image in accordance with the illuminance in a dark environment without depending on illumination or the like.

Background Art

A CCD type imaging element which is a solid imaging element is used for most of imaging elements for small video cameras or small video-integral type cameras. Though a CMOS type imaging element is also used, it only differs in the element of a photoelectrical conversion section and has the same process of obtaining an image signal. A case where a CCD type imaging element is used as the above described solid imaging element will be explained as an example below.

In order to obtain a clear image in a dark environment, an image is normally taken with enhanced illuminance of an object under illumination, but since lighting equipment is inconvenient to carry on and also involves great power consumption, it is preferable in the case of a small video camera or the like that images be taken even in a dark environment without lighting equipment.

With regard to a camera using a solid imaging element, an example of a digital still camera is descried in Japanese Patent Laid-Open No. 2001-285707. This document describes a system which automatically controls exposure by using a CCD type imaging element, adjusting the imaging sensitivity, electronic shutter, gain of a CDS/AGC circuit which amplifies signal output of the imaging element and values of control parameters such as aperture value of an iris.

The present invention is a video camera which takes moving images and adjusts control parameters shown in Japanese Patent Laid-Open No. 2001-285707 so as to set exposure in a dark environment, whereas fixed control parameters are conventionally set with increased sensitivity when the environment is dark at a given moment. Especially, a long time is set for the above described electronic shutter, that is, exposure time. For this reason, there is a problem that the motion of the image captured is not smooth.

The electronic shutter or so-called exposure time in a CCD type imaging element is described in Japanese Patent Laid-Open No. 2001-285707, which is constructed of the following system.

The CCD type imaging element has a light-receiving surface made up of a photoelectrical conversion element which converts light of a photodiode array (PD) or the like to electric charge, a accumulation section which accumulates charge generated and a charge transfer element (CCD) which transfers the charge in the accumulation section in vertical direction and in horizontal direction to obtain an image signal.

Thus, the input light quantity which is incorporated into the imaging element is determined by the duration of accumulation of charge generated from the PD, and therefore if this duration of accumulation is controlled, it is possible to achieve temporal control over the light quantity incorporated into the imaging element, that is, control of the exposure time without using any mechanical shutter. This is called an "electric shutter" or "electronic shutter."

With a video camera using a CCD type imaging element, images are taken for an electronic shutter time (exposure time) of 1/60 sec in accordance with a field period (Tf) of a video signal in normal image taking. This is a case with image taking in a bright environment where there is a sufficient input light quantity per unit time incorporated in 1/60 sec and high signal output is obtained from the imaging element. In a dark environment, the input light quantity per unit time is small, and therefore in order to increase a signal output, the input light quantity is accumulated with the exposure time extended so as to obtain a high signal output.

Thus, high sensitivity image taking in a dark environment is realized by extending the period during which charge generated from the PD of the imaging element is accumulated in the accumulation section, which is equivalent to the electronic shutter time (exposure time).

For example, when the exposure time is set to 0.5 sec, this length corresponds to 30 fields (15 frames), and therefore the charge from the PD for a period of 30 fields is accumulated in the accumulation section. The last 1 field of this accumulation period (exposure time) becomes an accumulated image signal. Furthermore, the image signal of the last 1 field of this accumulation period is signal-processed, converted to a video signal and accumulated in memory for a period of 30 fields to obtain a continuous video signal. This exposure time can take any value if it is a multiple of the frame period (approximately 33 ms) up to approximately 0.5 sec, but it is often set to approximately 0.5 sec so that images can be taken even in a considerably dark state.

However, in this case, the last 1 field out of the 30 fields (approximately 0.5 sec) accumulated is taken from the CCD, and so one still image is obtained every 30 fields, and therefore the motion of the image is not smooth. When the motion of the object is quick, image taking of the motion may be impossible. This may result in a problem that it is not possible to obtain a video signal level corresponding to the illuminance of the object.

The present invention is intended to solve the above described problems and it is an object of the present invention to provide an image processing device capable of automatically setting the above described accumulation time (exposure time) corresponding to illuminance at a given moment even in a dark environment, following the motion of the object as smoothly as possible and also optimizing the image quality at that moment.

Disclosure of the Invention

In order to solve these problems, the image processing device of the present invention is an image processing device provided with a first image-taking mode used when it is bright around and a second image-taking mode used when it is dark around, comprising an iris for controlling the light quantity of an optical signal coming from outside, an imaging element for outputting the optical signal from the iris as a video signal, gain control means for performing gain control of the video signal from the imaging element, signal processing means for signal-processing the output signal of the gain control means and imaging control means for controlling the opening degree of the iris, the exposure time of the imaging element and the gain amount of the gain control means based on the video signal from the signal processing means, wherein the imaging control means judges the brightness around in the second image-taking mode based on the video signal from the signal processing means and make changeable the exposure time in the imaging element in accordance with the brightness.

Furthermore, the image processing device according to the present invention is an image processing device which enables image taking in a dark environment by setting an electronic shutter-ON time which is an exposure time of an imaging element to an $m \cdot Tf$ (m: positive number) period within a period $M \cdot Tf$ (M: 1 and even number of 2 or greater, Tf: 1-field period), comprising an imaging element made up of an imaging surface consisting of photoelectrical conversion elements for converting light to charge, an accumulation section for accumulating the charge generated from the photoelectrical conversion element and a charge transfer element (Charge-Coupled Device) for transferring the accumulated charge in vertical and horizontal directions and obtaining an image signal, the imaging element consecutively changing the exposure time $m \cdot Tf$ in a period $M \cdot Tf$ and automatically setting $m \cdot Tf$ to an optimum exposure time while maintaining a relationship: $M \cdot Tf = m \cdot Tf + n \cdot Tf$, where $n \cdot Tf$ (n: positive number of 0 to 2) is an electronic shutter-OFF time, a lens unit made up of a lens for forming an object image on the imaging surface of the imaging element and an iris or the like, an imaging element driver which performs electronic shutter-ON drive control for accumulating charge from the charge transfer element in the accumulation section for the electronic shutter-ON time $m \cdot Tf$, discharge drive control for discharging the charge from the accumulation section for the electronic shutter-OFF time $n \cdot Tf$ and drive control for extracting an image signal of a last 1 field obtained for every the period $M \cdot Tf$ through vertical and horizontal transfers of the charge transfer element accumulated for the $m \cdot Tf$ time, an amplifier which amplifies the image signal obtained from the imaging element through driving of the imaging element driver, a signal processing circuit which signal-processes the image signal obtained from the amplifier to obtain a video signal made up of a brightness signal and color signal, brightness detecting means for integrating the brightness signal indicating the light quantity value entering the imaging surface during the electronic shutter-ON time $m-Tf$ for the last 1-field period of the exposure period and detecting the input light quantity value corresponding to the brightness of the object, brightness reference setting means for setting a reference value of a brightness signal component corresponding to the brightness, comparison means for comparing a brightness signal component value obtained from the brightness detecting means with the reference value of the brightness signal component from the brightness reference setting means and obtaining an error signal between both signals for every period $M \cdot Tf$ and imaging element control means, wherein the imaging element control means comprises exposure memory means for storing the electronic shutter-ON time $m \cdot Tf$ set for every period $M \cdot Tf$ in memory, exposure time calculation means for subjecting an exposure time correction amount $\Delta m-1 \cdot Tf$ obtained through a calculation based on the error signal obtained 1 period ahead ($M-1 \cdot Tf$ period) in a current period ($M0 \cdot Tf$ period) during an electronic shutter-ON time $m-1 \cdot Tf$ accumulated in the exposure memory means 1 period a head ($M-1 \cdot Tf$ period) of the current period ($M0.Tf$ period) to addition or subtraction calculation processing according to the sign of the error signal and calculating an electronic shutter-ON time $m1 \cdot Tf$ ($= m-1 \cdot Tf \pm \Delta m-1 \cdot Tf$) in the next period ($M1 \cdot Tf$ period) and control signal generating means for storing the electronic shutter-ON time $m1 \cdot Tf$ in the exposure memory means and generating a second control signal for extracting a 1-field image signal obtained by accumulating an electronic shutter-ON time supplied to the imaging element driver based on the electronic shutter-ON time $m1 \cdot Tf$ and storing a first control signal indicating an electronic shutter-OFF period, and first and second control signals generated based on the electronic shutter-ON time $m-Tf$ from the control signal generating means are supplied to the imaging element driver, a feedback control loop is thereby formed during an $M \cdot Tf$ period, the electronic shutter-ON time $m \cdot Tf$ is changed and the electronic shutter-ON time (exposure time) $m \cdot Tf$ at a time point at which the error signal becomes zero or approximates to zero is held to thereby obtain a video signal under an optimum exposure condition.

Furthermore, the present invention controls the above described amplifier and iris so as to realize image taking in an environment of all levels of brightness, covering a bright environment outside the brightness range covered through control of the above described exposure time and a dark environment outside the range to enable image taking in an environment of all levels of brightness.

This construction is a high-sensitivity image processing system capable of setting an optimum automatic exposure time using the function capable of accumulating the light quantity input to the imaging element of the video camera and can additionally achieve the following effects by controlling the iris and AGC amplifier:

(1) Setting an optimum exposure time in accordance with illuminance reduces deterioration of responsivity of motion of an output image when the exposure time is extended.
(2) A video signal output in accordance with the exposure time is obtained. That is, a video signal output in accordance with the brightness is obtained.
(3) Image taking is possible in an environment ranging from substantially complete dark to quite bright levels.

Brief Description of the Drawings

FIG. 1 is a block diagram of an overall circuit according to Embodiment 1 of the present invention;
FIG. 2 is a time chart illustrating the electronic shutter operation of an imaging element according to the embodiment of the present invention;
FIG. 3 is a time chart illustrating the electronic shutter operation in the case of a specific exposure time of the imaging element according to the embodiment of the present invention;
FIG. 4 is a detailed circuit block diagram of imaging element control means according to the embodiment of the present invention;
FIG. 5 is a detailed circuit block diagram of iris control means according to the embodiment of the present invention;
FIG. 6 is a detailed circuit block diagram of AGC gain control means according to the embodiment of the present invention;
FIG. 7 is a detailed circuit block diagram of selection signal generating means according to the embodiment of the present invention;
FIG. 8 is a time chart of input/output signals of selection signal generating means according to the embodiment of the present invention;
FIG. 9 illustrates a relationship between the brightness of an object, exposure time, between the brightness and iris value and between the brightness and AGC gain value, and control areas according to the embodiment of the present invention; and
FIG. 10 illustrates a relationship between the brightness of an object and brightness signal component value Y and basic signal reference value Ys according to the embodiment of the present invention.

Best Mode for Carrying Out the Invention

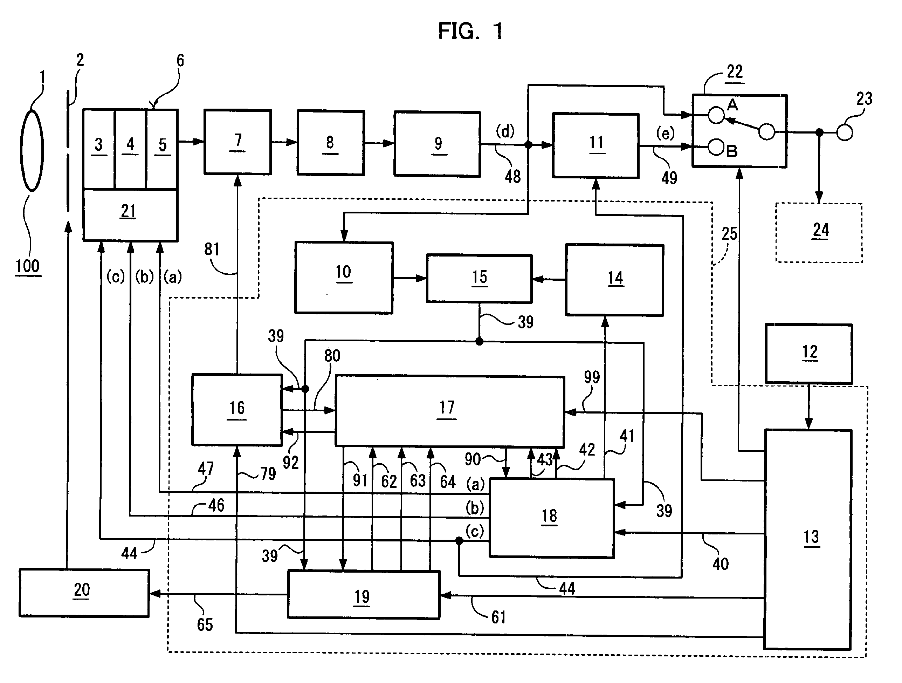

Embodiments of the present invention will be explained with reference FIGS. 1 to 10.

(Embodiment 1)

FIG. 1 shows an overall configuration of an embodiment of the present invention.
In FIG. 1, reference numeral 1 denotes a lens section for forming an object image, 2 denotes an iris section made up of an iris which mechanically adjusts an incoming light quantity and an iris drive motor (not shown) which changes the diameter of the iris and 100 denotes a lens unit made up of the lens section 1 and iris section 2. Reference numeral 20 denotes an iris mechanism driver which drives the iris drive motor of the iris section 2. Reference numeral 19 denotes iris control means for setting a diameter value of the iris.
Reference numeral 3 denotes a photoelectrical conversion element (referred to as "PD") which converts light to charge such as a photodiode array, the light quantity of which is adjusted by the lens unit 100 for photoelectrically converting the optical image formed. Reference numeral 4 denotes an array-shaped accumulation section which accumulates the charge from the PD 3 for a period during which the electronic shutter is open, that is, exposure time (exposure period) . Reference numeral 5 denotes a charge transfer element (hereinafter referred to as "CCD") which transfers the charge accumulated in the accumulation section 4 in vertical and horizontal directions and obtains an image signal. Reference numeral 6 denotes an imaging element made up of the PD 3, accumulation section 4 and CCD 5. Reference numeral 21 denotes an imaging element driver which controls and drives the imaging element 6 to extract an image signal from the imaging element 6. Reference numeral 18 denotes imaging element control means for generating timing signals to set the above described electronic shutter-ON time (exposure time) for the imaging element driver 21 and extract accumulated image signals.
An amplifier 7 is an amplifier made up of an AGC circuit and amplifies the image signal together with a CDS circuit which reduces noise of the image signal obtained from the imaging element 6. Reference numeral 16 denotes AGC gain control means for setting a gain of the AGC circuit of the amplifier 7.

An A/D converter 8 converts the image signal obtained from the amplifier 7 to a digital signal. A signal processing circuit 9 converts the digital image signal obtained from the A/D converter 8 to a digital standard video signal made up of a brightness signal and color signal.

Here, a normal image-taking mode (first image-taking mode) and a high-sensitivity image-taking mode (second image-taking mode) will be explained.

The normal image-taking mode referred to here is a normal image taking state within a range in which it is bright around, no illumination is required and an image captured can be normally judged. In this mode, as described above, the electronic shutter time (exposure time) is set by the imaging element control means 18 to 1/fv (fv: field frequency of video signal) sec (approximately 1/60 sec) which is a 1/fv period of the video signal. Therefore, the field period (Tf) coincides with the electronic shutter time (exposure time) in the normal image-taking mode, and therefore normal moving image taking can be performed. On the other hand, in the high-sensitivity image-takingmode according to the present invention, effective image taking can be performed without illumination even in a situation in which a good image cannot be captured without illumination in the normal image-taking mode, and moreover, the device in this mode can obtain a clear image signal even when the surrounding situation changes and it becomes brighter. These modes can be switched as follows.

A mode switching button 12 in FIG. 1 is a switching button which generates a command signal for switching between the above described two modes. Mode signal generating means 13 generates a control signal for changing the setting condition of each control means and some means from one mode to the other mode according to a command signal from the mode switching button 12. When power to this apparatus is turned ON, the normal image-taking mode is set. When the mode should be changed to the high-sensitivity image-taking mode, pressing the mode switching button 12 allows the mode to be changed to the high-sensitivity image-taking mode by the above described command signal. Pressing the button again causes the device to return to the original normal image-taking mode. This corresponds to a so-called toggle operation. Memory means 11 is a memory for storing a periodically obtained 1-field video signal accumulated for an exposure time from the signal processing circuit 9 for that 1 period to convert the 1-field video signal to a continuous video signal in the high-sensitivity image-taking mode. A switch means 22 switches between the video signals obtained in both modes according to a switching control signal from the mode signal generating means 13.

First, in the normal image-taking mode, as described above, a control signal is supplied from the mode signal generating means 13 to the imaging element control means 18 via a signal line 40 so that an electronic shutter time which the imaging element control means 18 gives to the imaging element driver 21, that is, exposure time becomes above described 1/fv sec (= Tf) . To make signal lines easily distinguishable, signal lines are numbered.

Therefore, a normal moving image image signal is obtained from the imaging element 6 as described above, subjected to amplification and digital signal processing by the amplifier 7, A/D converter 8 and signal processing circuit 9 respectively and a digital video signal of consecutive moving images is obtained from the signal processing circuit 9. The digital video signal obtained is output via a terminal A of the switch means 22. Reference numeral 23 denotes an output terminal and this becomes an output terminal in the case of a specification of a camera only. Reference numeral 24 denotes a recorder which can record/reproduce a video signal such as digital video cassette recorder or disk recorder. In the case of an video-integral type camera, a video signal of the switch means 22 is recorded by the recorder 24.

In the case of a normal image-taking mode, a setting of exposure time from the mode signal generating means 13 to the imaging element control means 18 is 1/fv sec, while the AGC gain control means 16 which sets a gain of the AGC circuit of the amplifier 7 and the iris control means 19 which sets an iris value are also supplied with control signals for settings from the mode signal generating means 13. The AGC gain is set to a minimum value (0 dB) and the iris is set to a steady-state value, but when the input light quantity increases, an iris value is set through iris control which will be described later.

This is the explanation of the operation in the normal image-taking mode.

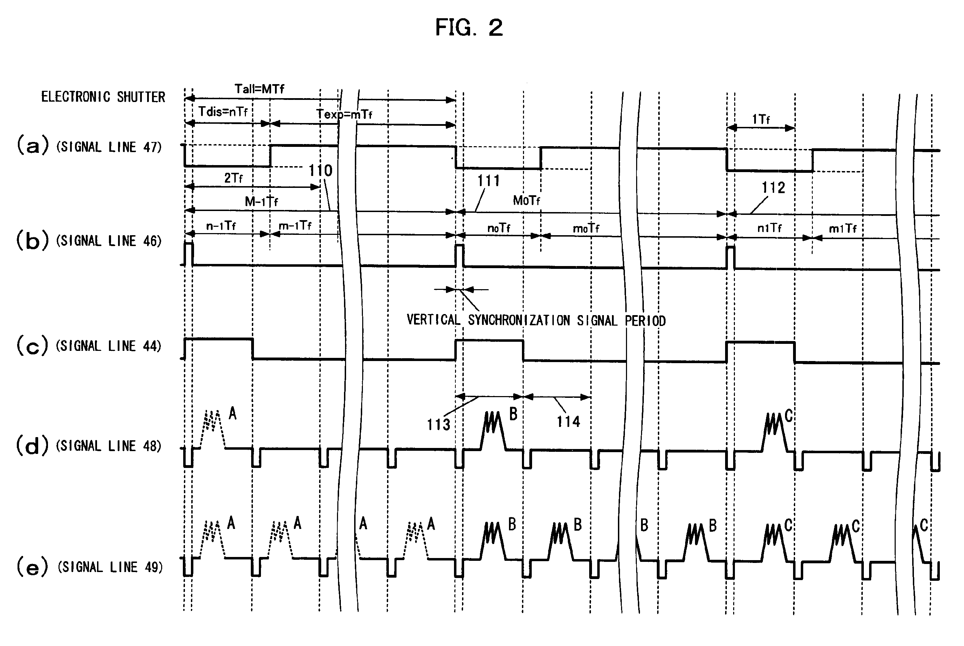

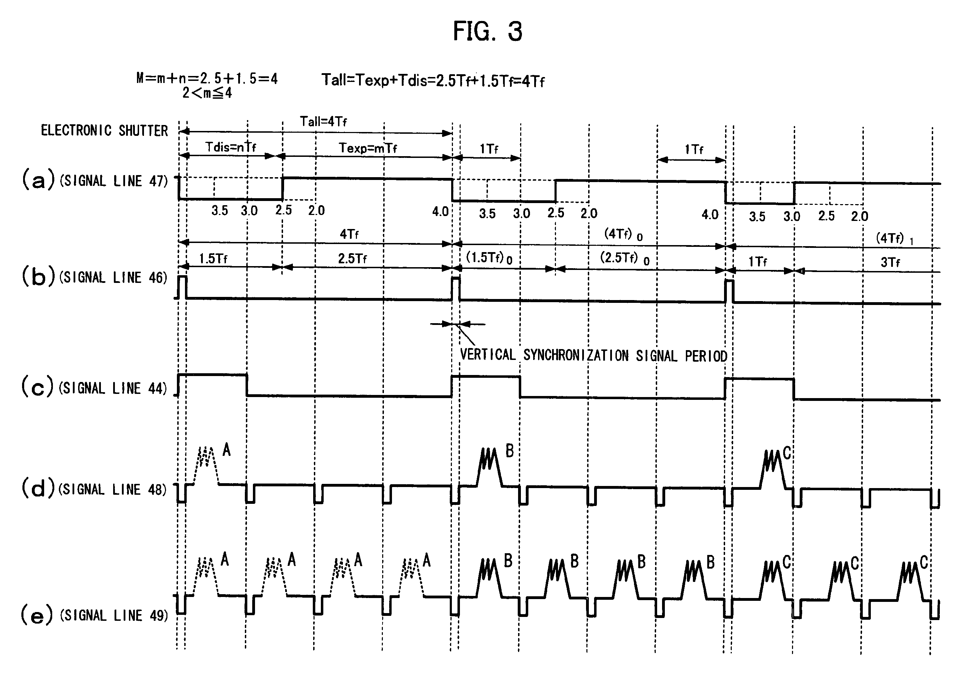

The high-sensitivity image-taking mode according to the present invention applies to a device to obtain an acceptable image signal even in a dark environment by setting an electronic shutter time, that is, exposure time, which is longer than a 1-field period (Tf = 1/fv sec). The operation of the electronic shutter in this case will be explained using FIG. 2 and FIG. 3.

In a video camera, an image consists of frame units each frame made up of odd and even fields of a video signal. Since the electronic shutter-ON time (hereinafter also referred to as "exposure time") corresponds to a period during which charge from the PD 3 is accumulated in the accumulation section 4, and therefore setting the exposure time to a time exceeding a 1-field period requires periodic signal processing in units of several frames including the exposure time.

In the case of the high-sensitivity image-taking mode, the imaging element driver 21 which drives and controls the accumulation section 4 and CCD 5 of the imaging element 6 is supplied with control signals shown in FIGS. 2(a), (b), (c) from the imaging element control means 18 via signal lines 47, 46, 44. (FIGS. 2 (a), (b), (c) correspond to (a), (b), (c) shown in signal lines 47, 46, 44 in FIG. 1).

A first control signal (a) in FIG. 2 is a signal for specifying an exposure time (charge accumulation period) and a discharge period and is a control signal indicating an exposure time $Texp = m \cdot Tf$ which corresponds to a period during which the charge from the PD 3 is accumulated in the accumulation section 4 and an electronic shutter OFF-time $Tdis = n \cdot Tf$ which corresponds to a period during which the charge from the PD 3 is discharged and no charge is accumulated in the accumulation section 4. Texp and Tdis are designed to have the following relationship so that an electronic shutter operation is performed periodically.

$$Tall = Texp + Tdis$$
$$= m \cdot Tf + n \cdot Tf$$
$$= (m+n)Tf = M \cdot Tf \qquad \dots(1)$$

$$m+n = M \qquad \dots(2)$$

where Tf = 1-field period, m: a positive number of 1 to 34, n: positive number of 0 to 2, M: 1 or even number of 2 to 34 or so and the relationship between m and M is expressed by the following expression:

$$M = 1 \text{ when } m = 1$$

$$M = 2 \text{ when } 1 < m \leq 2$$
$$M-2 < m \leq M \text{ when } 2 < m \qquad \dots(3)$$

That is, an electronic shutter-ON/OFF operation is performed with $M \cdot Tf$ as 1 period which is the sum of $m \cdot Tf$ as an exposure time (electronic shutter-ON time) and $n \cdot Tf$ as a discharge period (electronic shutter OFF-time).

M = 1 when m = 1. This is the same as the exposure time (Tf = 1/fv) in the normal image-taking mode. FIG. 3 (a) shows a control signal when m = 2.5, that is, exposure time $Texp = 2.5 Tf$. In this case, since $2 < 2.5 \leq 4$ from the above described relationship, M = 4 and n = M-m = 4-2.5 = 1.5, that is, Tdis = 1.5Tf. Therefore, image taking is performed with the electronic shutter having an exposure time of 2.5Tf assuming 4Tf as 1 period.

Next, the charge accumulated in the accumulation section 4 during the exposure time $m \cdot Tf$ is extracted as an image signal through transfers by the CCD 5 in the vertical and horizontal directions. For this purpose, the imaging element control means 18 supplies a signal indicating a period during which the accumulated charge shown in FIG. 2 (b) is transferred to the CCD 5 or a charge transfer pulse indicating the vertical/horizontal transfer period and the image capturing period of the CCD 5 shown in FIG. 3 (b) to the imaging element driver 21. This pulse period corresponds to a vertical synchronization signal flyback period, during which charge is transferred from the accumulation section 4 to the CCD 5. Furthermore, if the charge transferred to the CCD 5 during a 1-field section for every $M \cdot Tf$ period is transferred in the vertical direction and horizontal direction by the CCD 5 itself using a gate signal shown in FIG. 2 (c) or FIG. 3(c), an image signal accumulated for the exposure time $m \cdot Tf$ for every $M \cdot Tf$ period is obtained from the CCD 5 of the imaging element 6. When this signal passes through the amplifier 7, A/D converter 8 and signal processing circuit 9, a 1-field video signal in which an optical image from the object is accumulated for an $m \cdot Tf$ period (exposure time) for every $M \cdot Tf$ period shown in FIG. 2 (d) or FIG. 3 (d) as charge is obtained from the signal processing circuit 9 (FIG. 2 (d) or FIG. 3 (d) corresponds to a signal line 48(d) of the signal processing circuit 9 in FIG. 1).

In this case, the video signal from the signal processing circuit 9 becomes a 1-field intermittent signal for every $M \cdot Tf$ period as described above, and therefore it is not possible to see the image without transforming it to a continuous video signal. Reference numeral 11 denotes memory means for this purpose. The memory means 11 is supplied with the gate signal shown in FIG. 2(c) or FIG. 3(c) above via a signal line 44 from the imaging element control means 18 and the above described 1-field video signal is accumulated. When the period without any signal is replaced by the signal accumulated in the memory means 11, the continuous video signal shown in FIG. 2(e) or FIG. 3 (e) is obtained from the memory means 11 (FIG. 2(e) or FIG. 3(e) corresponds to a signal line 49(e) in FIG. 1).

In the high-sensitivity image-taking mode, a control signal from the mode signal generating means 13 is supplied to the switch means 22 as described above and a common terminal of the switch means 22 is connected to a terminal B, and therefore the video signal shown in FIG. 2(e) or FIG. 3(e) above from the memory means 11 is obtained at the output terminal 23 connected to the switch means 22 and in the case of the video-integral type camera, this signal is recorded by the above described recorder 24. This is the electronic shutter operation and video signal processing in the high-sensitivity image-taking mode.

Next, using this electronic shutter operation, the control method capable of automatically setting an optimum exposure time according to the present invention will be explained below.

A 1-field intermittent video signal is obtained for every M·Tf period shown in FIG. 2 (d) or FIG. 3 (d) above from the signal processing circuit 9. As described above, object light is converted to charge by the PD 3, accumulated in the accumulation section 4, scanned by the CCD 5 and an image signal thereby obtained is subjected to signal processing at the signal processing circuit 9 and converted to a video signal made up of a brightness signal component and color signal component. That is, since the brightness signal component is proportional to the light quantity from the object, an integral value for a 1-field section of this brightness signal component indicates the light quantity input to the imaging element 6 during an electronic shutter-ON period. Brightness detection means 10 integrates the brightness signal for 1 field to obtain the incoming light quantity during the electronic shutter-ON period m·Tf and detects a brightness signal component value Y (integration period corresponds to a section 113 shown in FIG. 2 (c)).

Brightness reference settingmeans 14 includes a data table or the like storing predetermined reference values of brightness signal component values corresponding to the object illuminance and this data table is determined by an exposure time m·Tf value as will be described later.

Comparison means 15 compares the brightness signal component value Y from the brightness detection means 10 with a reference value Ys of the brightness signal component from the brightness reference setting means 14 and outputs an error signal Yd (= Y-Ys) thereof.

The error signal obtained by the comparison means 15 is supplied to the imaging element control means 18, gain control means 16 and iris control means 19 via a signal line 39.

From above, a control loop is formed from imaging element 6→amplifier 7→A/D converter 8→signal processing circuit 9→brightness detection means 10→comparison means 15→imaging element control means 18→imaging element driver 21→imaging element 6. According to this control loop, the above described brightness signal component value equivalent to the charge accumulated for an exposure time m·Tf for every M·Tf period is periodically compared with a reference value of the brightness signal component for every period and feedback control is established so as to determine the exposure time in the next period based on the error signal Yd thereof.

As described above, since the error signal Yd = brightness signal component Y - reference value Ys of brightness signal component, it would be all right if the exposure time m·Tf can be automatically adjusted from these relationships such that the reference value Ys of the brightness signal component corresponding to the object illuminance and brightness signal component Y for every M·Tf period. Therefore, in order to calculate an exposure time when Y = Ys (not a complete matching condition but within a range of a certain width), when Y>Ys, the input light quantity is greater than the reference value (the object illuminance is bright), that is, the current exposure time is long, and therefore control can be performed such that the current exposure time becomes shorter. On the contrary, when Y<Ys, the input light quantity is smaller than the reference value (the object illuminance is dark), that is, the current exposure time is short, and therefore control can be performed such that the current exposure time becomes longer using the above described control loop. The means for calculating this exposure time and generating a control signal is the imaging element control means 18.

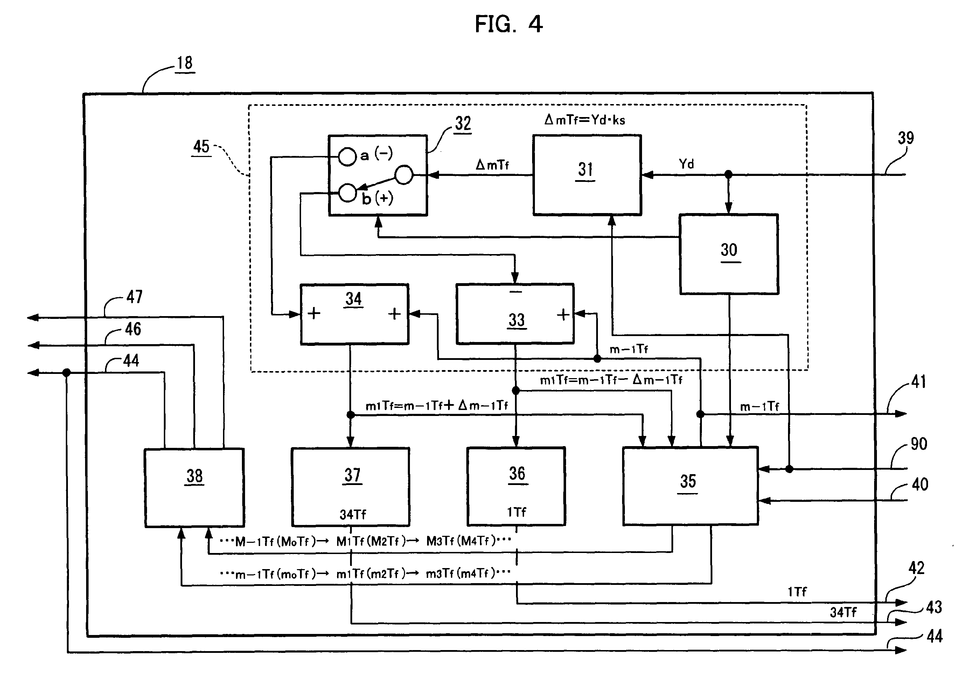

FIG. 4 is a specific block diagram of the imaging element control means 18.

The error signal Yd is supplied to imaging element control means 18 from the comparison means 15 via the signal line 39. An exposure correction value calculation means 31 is intended to calculate an exposure time correction value Δm·Tf for determining the exposure time in the next period based on the error signal Yd and performs a calculation expressed by the following expression:

```
Exposure time correction value Δm·Tf =
      error signal Yd×exposure time correction coefficient
 ks                              … (4)
```

where ks is a constant. Since the light quantity is energy, Expression (4) can be expressed by a multiple-order function of Yd, yet it is complicated, and so it is expressed by a first-order expression.

Reference numeral 30 is first judging means for judging the sign of the error signal Yd, judging the 0 (zero) value and generating a control signal. In other words:

error signal Yd = brightness signal component value Y - brightness signal Ys

and therefore the first judging means is the means for generating respective control signals by making the following decisions:

When Y>Ys, positive (+)
When Y = Ys, 0
When Y<Ys, negative (-)

As shown in FIG. 4, first switching means 32 changes the destination of the above described exposure time correction value $\Delta m \cdot Tf$ according to a control signal from the first judging means 30. Reference numeral 33 denotes first subtractionmeans and 34 denotes first addition means.

Exposure time (electronic shutter-ON time) calculation processing means 45 consists of the first judging means 30, first switching means 32, addition means 34 and subtraction means 33.

Exposure memory means 35 accumulates the value of the exposure time $m \cdot Tf$ obtained through a calculation by the exposure time calculation means 45 and the value of the period $M \cdot Tf$ calculated from Expressions (1), (2) and (3) above based on this exposure time $m \cdot Tf$ until the next period.

As shown in FIG. 2, the exposure time $m1 \cdot Tf$ in the next period is calculated by the exposure time calculation means 45 in the current period (M0·Tf period) and the exposure time $m1 \cdot Tf$ (= exposure time $m-1 \cdot Tf$ in the preceding period $\pm$ exposure time correction value $\Delta m-1 \cdot Tf$) in the next period is obtained. (The calculation period corresponds to the section indicated by reference numeral 114 shown in FIG. 2(c)). In this way, the value of the exposure time $m-1 \cdot Tf$ in the preceding period (M-1·Tf) is delayed up to the current period (M0·Tf) by the exposure memory means 35, the exposure time $m1 \cdot Tf$ and period $M \cdot Tf$ in the next period calculated in the current period (M0·Tf) are obtained for every two periods and accumulated in memory. Reference numeral 38 denotes control signal generating means for generating the control signals shown in FIGS. 2(a), (b) and (c) given to the imaging element driver 21 from the values of the exposure time $m \cdot Tf$ and the period $M \cdot Tf$ for every two periods obtained from the exposure memory means 35.

As described above, when Y>Ys, a positive control signal is supplied from the first judging means 30 through the first switching means 32, and therefore the above described exposure time correction value $\Delta m \cdot Tf$ is supplied to a subtraction (-) input of the subtraction means 33 via a terminal b(+). The value of an exposure time $m-1 \cdot Tf$ of the current period M0·TF in the preceding period M-1·Tf shown in FIG. 2 (a) is supplied to an addition (+) input of the subtraction means 33 from the exposure memory means 35 and an exposure time corresponding to the next period expressed by the following Expression is obtained from the subtraction means 33.

$$ m1 \cdot Tf \ = \ m-1 \cdot Tf - \Delta m-1 \cdot Tf \qquad \ldots (5) $$

Y>Ys means that the brightness signal component value obtained by the exposure time $m-1 \cdot Tf$ in the preceding period M-1·Tf is greater than a reference value, that is, the exposure time in the preceding period is long, and therefore if the next period is shortened, Y approximates to Y = Ys.

The exposure time $m1 \cdot Tf$ in the next period calculated by Expression (5) is shorter than the exposure time $m-1 \cdot Tf$ in the preceding period by the exposure time correction value $\Delta m-1 \cdot Tf$ in the preceding period calculated by Expression (4) above. These relationships are also shown in FIG. 4.

On the other hand, when Y<Ys, the first switching means is changed to a terminal a(-), and therefore $\Delta m \cdot Tf$ is supplied to one addition input of the addition means 34. The value of the exposure time $m-1 \cdot Tf$ in the above described preceding period M-1·Tf is supplied to the other addition input and the exposure time corresponding to the next period expressed by the following expression is obtained from the addition means 34.

$$ m1 \cdot Tf \ = \ m-1 \cdot Tf + \Delta m-1 \cdot Tf \qquad \ldots (6) $$

Y<Ys means that the brightness signal component value obtained for the exposure time $m-1 \cdot Tf$ in the preceding period M-1·Tf is smaller than the reference value, that is, the exposure time in the preceding period is short, and therefore if the exposure time in the next period is extended, Y approximates to Y = Ys.

The exposure time $m1 \cdot Tf$ in the next period calculated according to Expression (6) is longer than the exposure time $m-1 \cdot Tf$ in the preceding period by the exposure time correction value $\Delta m-1 \cdot Tf$ in the preceding period calculated according to Expression (4) above. These relationships are also shown in FIG. 4.

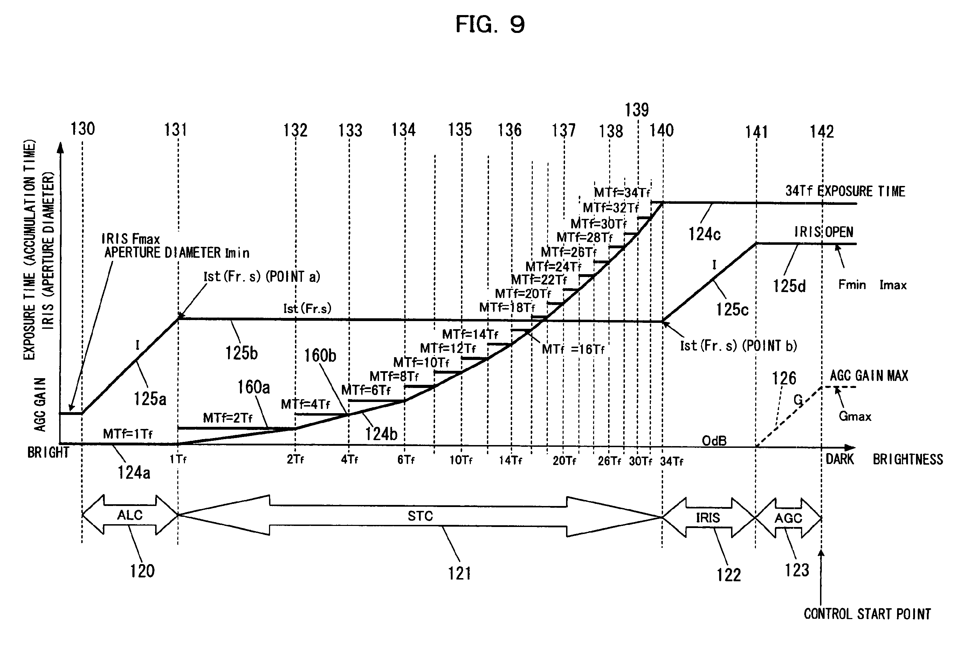

FIG. 9 is a graph showing the above described control system in a relationship between the brightness of an object and exposure time. The horizontal axis shows the brightness (illuminance) of the object. The brightness detected here is an incoming light quantity and shows from a state in which the iris is maximum, that is, opened to the full, the brightest (position of dotted line 130) to a dark state (position of dotted line 142). The vertical axis shows the exposure time m·Tf and period M·Tf to be set corresponding to the brightness of the object and also shows an iris value I and AGC gain value G in the iris control. As shown in the figure, there are four control areas according to the brightness. ALC 120 has the same range as that in the above described normal image-taking mode and the exposure time is fixed to a 1-field period length 1 Tf (1/fv) as indicated by reference numeral 124a. Only the iris is controlled. The iris value I is expressed by an aperture diameter. If this is expressed with an F value, the stop is closed (the aperture diameter is a minimum value) when it is brightest, and therefore the F value is max. As the brightness of the object becomes darker from that state, the stop is opened (the aperture diameter increases and the F value decreases) and control is performed such that an iris value corresponding to the brightness is set until the iris value I becomes Ist (Fr.s in F value). The range of this ALC 120 is controlled by the iris control means 19. STC indicated by reference numeral 121 denotes a control area in which an optimum exposure time m·Tf corresponding to the brightness of the object by the above described imaging element control means 18 is set. The relationship between the brightness and the exposure time m·Tf is as shown by the curve indicated by reference numeral 124b. From the relationship in Expression (3), the period M·Tf is 2Tf when the exposure time m·Tf ranges from 1Tf to 2Tf as indicated by reference numeral 160a and 4Tf when m·Tf ranges from 2Tf to 4Tf as indicated by reference numeral 160b. Thus, M·Tf has a stepped shape incrementing in 2Tf units according to the value of m·Tf as shown in the figure. In this STC area, the iris value I is fixed to standard Ist (Fr.s in F value). IRIS indicated by reference numeral 122 is a control area by the iris and controlled by the iris control means 19. AGC indicated by reference numeral 123 is a control area in the darkest range and controlled by the gain control means 16. In the areas of the IRIS 122 and AGC 123, the exposure time is fixed to a maximum value (34Tf shown in the figure). That is, the relationship between the brightness and electronic shutter-ON time (exposure time) of the object is fixed to a 1-field period length 1 Tf (1/fv) in the area of ALC 120. In the area of the STC 121 thereafter, m·Tf changes as shown by the curve indicated by reference numeral 124b according to the brightness and the exposure time is set in accordance with the brightness through the above described control of the imaging element control means 18. In the areas of the IRIS 122 and AGC 123, m·Tf is fixed to a maximum value (= 34Tf) as indicated by reference numeral 124c.

The relationship between the brightness and iris value in the area of ALC 120 changes rectilinearly from Imin (F value is Fmax) to Ist (Fr.s) as shown by the solid line indicated by reference numeral 125a and is set to an I value corresponding to the brightness . In the area of STC 121, it is fixed to standard Ist (Fr.s) as shown by the solid line indicated by reference numeral 125b. That area can be said to be the area for setting the exposure time m·Tf corresponding to the brightness as described above under that condition. The F value of the area of IRIS 122 changes rectilinearly from Ist (Fr. s) to Imax (Fmin) (open) as shown by the solid line indicated by reference numeral 125c and is set to an iris value corresponding to the brightness in that range. The AGC 123 is fixed to Imax (Fmin) as shown by the solid line indicated by reference numeral 125d. Curves 125a, 125b, 125c and 125d showing the relationship between the brightness and iris value I are expressed by the relationship between the brightness and iris aperture diameter, which is opposite to the relationship of the F value. As shown in the figure, when it is bright, the aperture diameter is reduced and the aperture diameter is reduced to a minimum value Imin in the brightest condition, while the F value is maximum Fmax. On the contrary, the aperture diameter reaches a maximum value Imax in the darkest condition and the F value reaches a minimum value Fmin.

The relationship between the brightness and AGC gain, which is another control parameter is fixed to a min value (= 0 dB) in the areas of ALC 120, STC 121 and IRIS 122. This means that an output is obtained from the amplifier 7 even when the gain of the AGC circuit is 0 dB in these ranges. The range of AGC 123 is a range within which no output is obtained unless the AGC gain is increased within a considerably dark range, which varies as shown by a dotted line 126 and control is performed such that it is set to an AGC gain value corresponding to the brightness in the range.

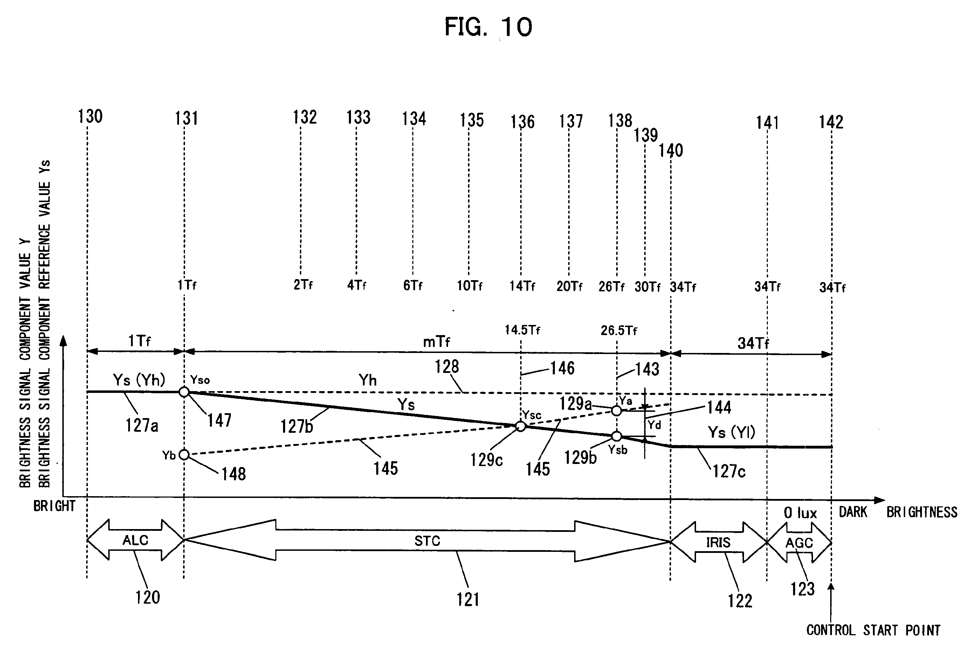

Next, the above described brightness signal component value Y, reference value Ys of the brightness signal component and difference signal (error signal) Yd between them will be explained using FIG. 10. In FIG. 10, the same lines and ranges as those in FIG. 9 are assigned the same reference numerals. The horizontal axis in FIG. 10 is the axis showing the brightness as in the case of FIG. 9. The vertical axis shows a brightness component value Y and reference value Ys of the brightness signal component. As in the case of FIG. 9, the horizontal axis shows areas from ALC 120 to AGC 123. In the respective areas, the reference values Ys of the brightness signal component in the respective areas are accumulated in a data table of a non-volatile memory or the like in the brightness reference setting means 14 as predetermined values. In the area of ALC 120, an incoming light quantity enough to take a maximum value of the brightness signal output can be obtained, and therefore if an iris value corresponding to the brightness so that Y reaches a maximum value Yh (= Ys) shown by reference numeral 127a can be set, it is possible to realize image taking under an optimum condition. In the area of STC 121, since the brightness of the object gradually becomes darker, the reference value Ys of the brightness signal component is set to a value that matches the brightness as shown by reference numeral 127b. As explained in FIG. 9, an exposure time corresponding to the brightness is set in the area of STC 121, and therefore the exposure time and the brightness have a one-to-one correspondence. Positions indicated by reference numerals 131 to 140 in FIG. 9 show representative exposure times. FIG. 10 also shows representative values (dotted line 131 to dotted line 140) of the exposure time corresponding to the brightness. From this, in the area of STC 121, the reference value Ys of the brightness signal component may be defined as a function of the exposure time m·Tf.

$$Ys = F(m\cdot Tf) \qquad\qquad ... (7)$$

In the areas of IRIS 122 and AGC 123, the reference value Ys of the brightness signal component is set to Y1 which prevents noise from increasing. In any way, the reference value Ys of the brightness signal component is determined by the exposure time in all areas. That is,

$$\text{Area of ALC: } Ys = F(1\ Tf) = Yh$$

$$\text{Area of STC: } Ys = F(m\cdot Tf)$$

In the areas of IRIS and AGC, Ys = F (34 Tf) = Yl. In all areas, the reference value Ys of the brightness signal component can also be set to Ys = Yh as indicated by a dotted line 128, but bright screens are obtained in all areas, which is not practical.

The relationship between Ys, Y and Yd and the exposure time based on Expression (5) above obtained through a calculation at the exposure time calculation processing 45 will be explained using FIG. 10. Suppose that the exposure time in the preceding period M-1·Tf (see FIG. 2(a)) is 26.5 Tf shown by a dotted line 143. M-1·Tf at that time is 28 Tf from Expressions (1), (2) and (3) . In this preceding period, the charge accumulated for an exposure time 26. 5 Tf is converted to a 1-field video signal in the current period M0·Tf (see FIG. 2 (a)), and it is Y that integrates only the brightness signal component of this signal. The point indicated by reference numeral 129a is the value of this Y. Suppose this is Ya. The point indicated by reference numeral 129b becomes Ys corresponding to the exposure time 26.5 Tf. Assuming that Ys at this time is Ysb, since the error signal Yd is the difference between Y and Ys, Yd is expressed by a solid line 144 between arrows and expressed by the following expression:

$$Yd = Y-Ys = Ya-Ysb$$

An exposure time correction value Δm·Tf expressed by Expression (4) is obtained by the exposure correction value calculation means 31.

$$\Delta m\cdot Tf = Yd\cdot ks = (Ya-Ysb)\cdot ks$$
$$= \Delta m-1\cdot Tf \qquad\qquad ... (8)$$

This value can be approximately estimated from FIG. 10. Ys having the same value as Ya is a point 129c, which is the intersection between the curve shown by a dotted line 145 (this dotted line is the solid line 127b turned upside down and passes through the point at 129a) and the curve shown by reference numeral 127b. Suppose this point Ys is Ysc. A dotted line 146 which passes through this point has an exposure time of 14.5 Tf (close to 14 Tf indicated by a dotted line 136). From these:

$$\Delta m-1\cdot Tf = 26.5Tf-14.5Tf = 12$$

In practice, this is calculated according to Expression (8). Δm-1·Tf is obtained from a correlation by multiplying the difference between Y and Ys by a correction coefficient ks. The exposure time m1·Tf in the next period M1·Tf is calculated from Expression (5) as:

$$m1 \cdot Tf = m-1 \cdot Tf - \Delta m - 1 \cdot Tf$$
$$= 26.5Tf - 12Tf$$
$$= 14.5Tf$$

In the next period, Y substantially matches Ys, and therefore if it is accumulated in the exposure memory means 35 for that exposure time, 14.5 Tf in this case, it is possible to realize image taking under an exposure condition that matches the brightness. Detecting a match between Y and Ys equals detecting that Yd is 0. This detection is performed by the first judging means 30. If Yd = 0, that is, Y = Ys = Ysc, a control signal is supplied from the first judging means 30 to the exposure memory means 35, and in subsequent periods, the exposure time accumulated at that time point is held. The area of STC 121 is controlled as shown above. Next, control over the area of ALC 120 having a brighter object illuminance than the area of STC 121 will be explained.

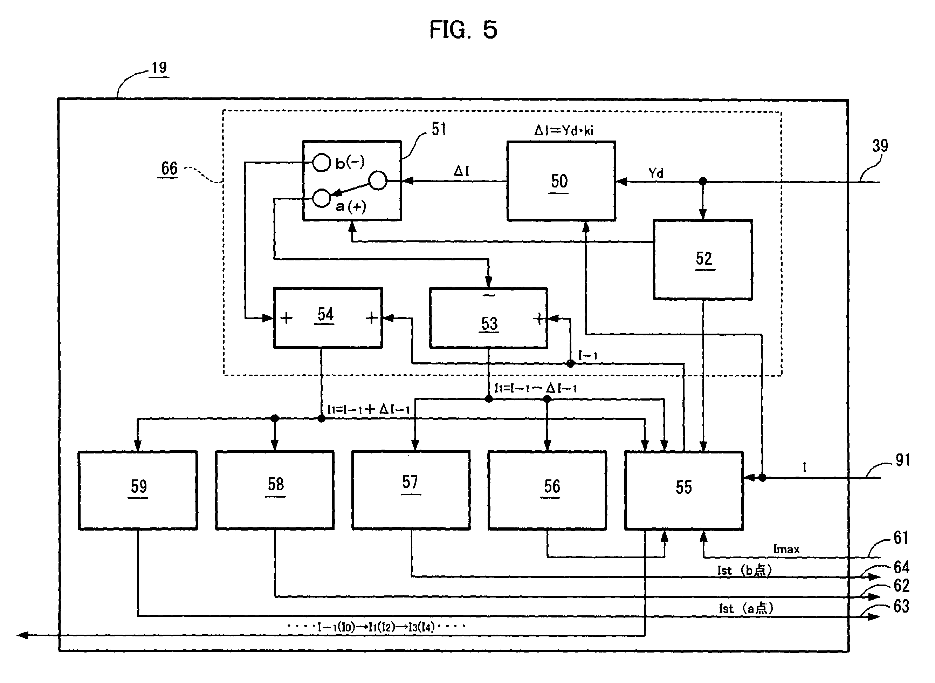

The control in this area is performed by the iris control means 19 in FIG. 1. The exposure time in this area is 1-field period 1 Tf (= 1/fv) as described above. FIG. 5 is a detailed block diagram of the iris control means 19. An error signal Yd (= Y-Ys) from the comparison means 15 is supplied to the iris control means 19 via a signal line 39. Iris value calculation means 66 calculates an iris value in the next period during the current period based on the error signal Yd in the preceding period. Reference numeral 55 denotes iris value memory means for storing iris values in the preceding period, current period and next period in memory, supplying the iris values to the iris mechanism driver 20 and generating a control signal for setting the iris 2.

The calculation processing in the iris value calculation means 66 will be performed as follows. Reference numeral 50 denotes iris correction value calculation means for performing a calculation based on the error signal Yd in the preceding period as shown in the following expression:

$$\Delta I = Yd \cdot ki \qquad \ldots (9)$$

where, $\Delta I$: iris correction value, ki: iris correction coefficient (constant).

Second judging means 52 judges the sign of the error signal Yd and judges the value 0 (zero) and generates a control signal. Since:

error signal Yd = brightness signal component value Y - reference value of brightness signal component Ys

and therefore this is the means for generating respective control signals by making the following decisions:

When Y>Ys, positive (+)
When Y = Ys, 0
When Y<Ys, negative (-)

Reference numeral 51 denotes second switching means for switching the destination of the above described iris correction value $\Delta I$ and is switched according to a control signal from the second judging means 52 as shown in FIG. 5. Reference numeral 53 is second subtraction means and reference numeral 54 denotes second addition means.

In this case, the brightness signal component value Y in the preceding period (field) is detected and compared with the reference value Ys of the brightness signal component (in this area, Ys = Yh (constant) as shown in FIG. 10). Based on the error signal Yd, an iris correction value $\Delta I$-1 in the preceding period (field) shown by Expression (9) is calculated using the iris correction means 50. In the current period (field), depending on whether the Yd is positive or negative, an addition or subtraction is performed between the iris value I-1 in the preceding period (field) obtained from the iris value memory means 55 and above described iris correction value $\Delta I$-1 by the second addition means 54 or second subtraction means 53 and an iris value I1 for the next period is calculated. 2-field cycle control is performed in such a way that the iris value I1 obtained is executed in the next period and an iris value I when Y = Ys(Yh), that is, Yd = 0 is held. Yd = 0 is judged by the second judging means 52. When Yd = 0, a control signal is supplied from the second judging means 52 to the iris value memory means 55 and the iris value at that time point is accumulated in memory and held, and therefore an optimum iris value corresponding to the brightness is set and optimum image taking can be realized. This is the method of controlling the area of ALC 120. Next, control over the area of IRIS 122 having an object illuminance darker than the area of STC 121 will be explained.

This area is controlled by the iris control means 19 in the same way as the area of ALC 120. The operation of the iris control means 19 in this area is basically the same as the above described area of ALC 120, but it differs in the control cycle, that is, exposure time m·Tf (= period M·Tf) and reference value Ys of the brightness signal component. A comparison is shown below (see FIG. 9 and FIG. 10).

|  | M·Tf (= period M·Tf) | Reference value Ys of brightness signal component |
|---|---|---|
| ALC | 1Tf (constant) | Yh |
| IRIS IRIS | Maximum value (34Tf) (constant) | Y1 |

In the ALC area, the period of the exposure time is 1 field (1 Tf) cycle. The actual control cycle is controlled in a 2 Tf cycle as described in the control of the ALC area. The period in the IRIS area is a 34 Tf cycle and this corresponds to approximately a 0.56-sec cycle. The control cycle is 68 Tf, double this cycle. Therefore, it is a 1.1-sec cycle. This area exists to enable image taking in a considerably dark condition, and therefore the aperture diameter of the iris is increased and control is performed so as to set the iris corresponding to the object illuminance in order to set the exposure time to a maximum value and further increase the sensitivity. The method of controlling the iris control means 19 is only different in the Ys from the above described cycle and has the same circuit operation as that in the ALC area, and therefore explanations thereof will be omitted. This is the control method for the IRIS area.

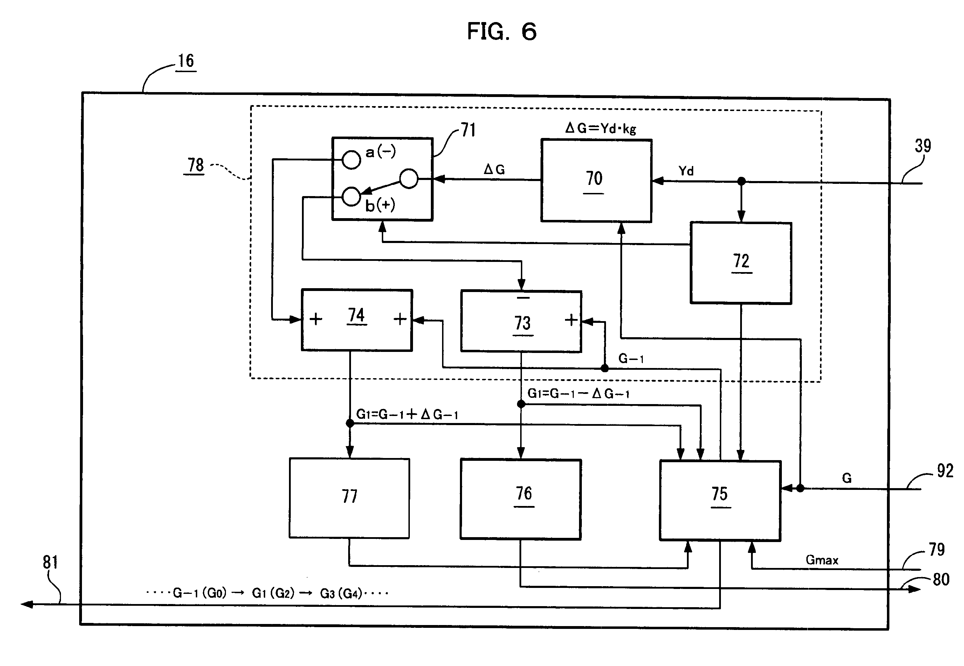

Next, the area of AGC 123 whereby an area darker than the area of IRIS 122 is controlled will be explained. As shown in FIG. 9 and FIG. 10, the exposure time is also a maximum in this area and control is performed so as to further increase the sensitivity with a maximum (F value minimum) of the aperture diameter of the iris, that is, in an OPEN state and enable image taking in a dark state. The control over this area is performed by the AGC gain control means 16. The period of the exposure time in this area is 34 Tf cycle as described above. FIG. 6 is a detailed circuit block diagram of the AGC gain control means 16. The error signal Yd (= Y-Ys) from the comparison means 15 is supplied to the AGC gain control means 16 via the signal line 39. Reference numeral 78 is gain calculation means for calculating a gain value in the next period during the current period based on the error signal Yd in the preceding period. Reference numeral 75 is AGC gain value memory means for storing gain values in the preceding period, current period and next period in memory, supplying the gain values to the amplifier including the AGC circuit and generating a control signal for setting the gain of the AGC circuit.

The calculation processing by the gain calculation means 78 will be performed as follows. Reference numeral 70 is AGC gain correction value calculation means for performing a calculation shown in the following expression based on the error signal Yd in the preceding period.

$$\Delta G \ = \ Yd \cdot kg \qquad\qquad\qquad ... \ (10)$$

where $\Delta G$: gain correction value, kg: gain correction coefficient (constant).

Third judging means 72 judges the sign of the error signal Yd, judges the value of 0 (zero) and generates a control signal. The error signal Yd = brightness signal component value Y - reference value of brightness signal component Ys, and therefore this is the means for generating respective control signals by making the following decisions:

When Y>Ys, positive (+)
When Y = Ys, 0
When Y<Ys, negative (-)

Reference numeral 71 denotes third switching means for switching the destination of the above described gain correction value $\Delta G$ and is switched according to a control signal from the third judging means 72 as shown in FIG. 6. Reference numeral 73 is third subtraction means and reference numeral 74 denotes third addition means.

In this case, the brightness signal component value Y corresponding to the input light quantity accumulated in the preceding period is detected and compared with the reference value Ys of the brightness signal component (in this area, Ys = Y1 (constant) as shown in FIG. 10). Based on the error signal Yd, the gain correction value means 70 calculates a gain correction value $\Delta$G-1 in the preceding period shown by Expression (10). In the current field, depending on whether the Yd is positive or negative, an addition or subtraction is performed between the gain value G-1 in the preceding period obtained from the AGC gain value memory means 75 and above described gain correction value $\Delta$G-1 by the third addition means 74 or third subtraction means 73 and a gain value G1 for the next period is calculated. 2-field cycle control is performed in such a way that the gain value G1 obtained is executed in the next period and a gain value G when Y = Ys (Yl), that is, Yd = 0 is held. Yd = 0 is judged by the third judging means 72. When Yd = 0, a control signal is supplied from the third judging means 72 to the gain value memory means 75 and the gain value at that time point is accumulated in memory and held, and therefore an optimum gain value corresponding to the brightness is set and optimum image taking can be realized. This is the control method in the AGC area.

In this way, the control over four areas has been explained individually and it is an object of the present invention to set an optimum exposure time, iris value and AGC gain value in accordance with the brightness of the object in order to realize effective image taking in a dark environment. That is, when a situation is changed from a state in which image taking is performed in a normal image-taking mode to image taking in a dark environment, it is an object of the present invention to change the mode to the above described high-sensitivity image-taking mode, obtain the exposure time, iris value, AGC gain value (hereinafter referred to as "3 optimum set values") under an optimum condition which matches the brightness in the above described four areas and maintain their values. For that purpose, a method of obtaining three optimum set values which match the brightness so as to automatically sweep the above described four areas will be explained.

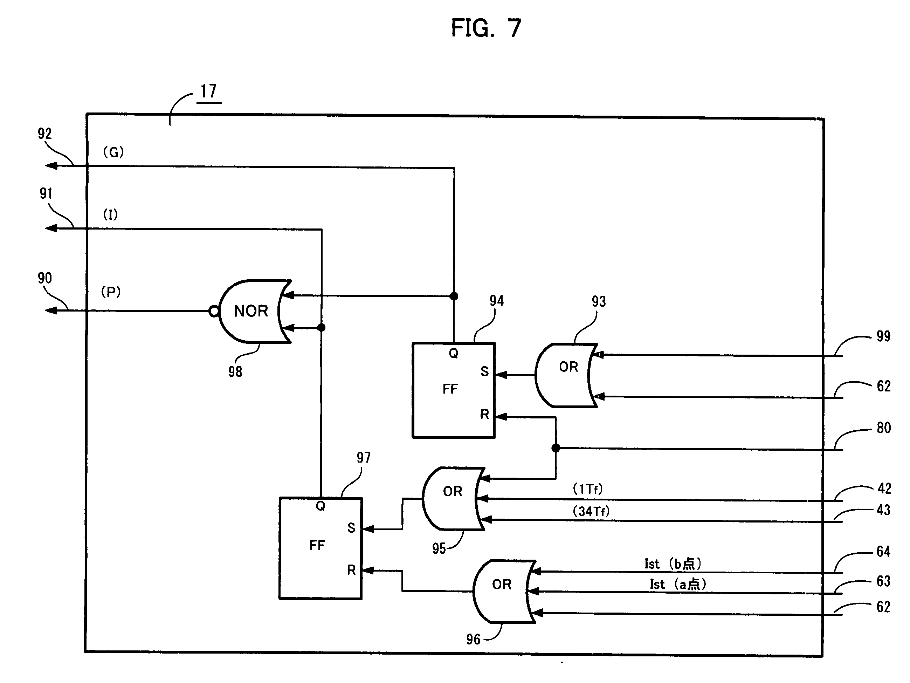

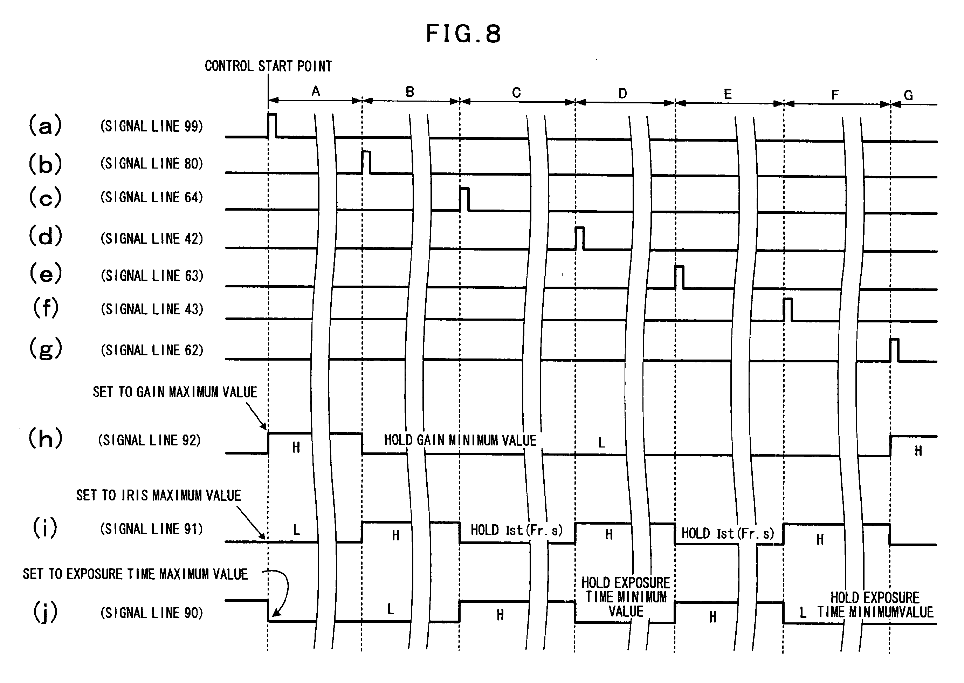

The selection signal generatingmeans 17 in FIG. 1 generates control signals to switch the imaging element control means 18, iris control means 19 and AGC gain control means in order to automatically sweep the above described four areas. FIG. 7 is a block diagram thereof and FIG. 8 shows time charts of signals on the respective signal lines.

Reference numerals 93, 95, 96 in FIG. 7 denote OR gates, 94, 97 denote flip flops, 98 denotes a NOR gate. The operation of the selection signal generating means 17 including these circuits will be explained below.

First, when the image taking condition is changed from a normal image-taking mode to a high-sensitivity image-taking mode (the mode switching button 12 is pressed for this switching as described above), the mode signal generating means 13 supplies a start signal shown in FIG. 8(a) to the selection signal generating means 17 via a signal line 99. At the same time, the mode signal generating means 13 supplies initial values at the control start to the exposure memory means 35 in the imaging element control means 18, iris value memory means 55 in the iris control means 19 and AGC gain value memory means 75 in the AGC gain control means 16 respectively. These initial values are prestored in the data table or the like in the mode signal generating means 13.

As shown at the control start point in FIG. 9, a maximum value (34 Tf) is supplied to the exposure memory means 35 as the initial value of the exposure time, Imax (Fmin) is supplied to the iris value memory means 55 and a maximum value (Gmax) is supplied to the AGC gain value memory means 75 and stored in the respective memories. This is done because it is unknown in which area of the above described four areas the brightness of the object is located, and so the control is started from the darkest state when the image-taking mode is switched to the high-sensitivity image-taking mode. This start signal passes through the OR gate 93 and is supplied to S (set input) of the flip flop 94. Therefore, a control signal G is obtained at the output Q of the flip flop 94 as indicated in FIG. 8 (h) which rises the moment the start signal enters. This control signal G is supplied to the AGC gain control means 16 via a signal line 92. This control signal G is supplied to the AGC gain value memory means 75 and AGC gain correction value calculation means 70 in the AGC gain control means 16. These means operate for a period during which this control signal G is at H level, the gain correction value as the output of the AGC gain correction value calculation means 70 is held to a 0 (zero) value for a period during which the control signal G is at L level and the AGC gain value memory means 75 holds the last memory value (minimum value) at the end of the operation. That is, the AGC gain value memory means 75 holds the memory value at the time that the level of the control signal G changes from H to L.

Thus, control is started assuming a dark condition as shown in FIG. 9, FIG. 10 and the above described three optimum set values corresponding to the above described brightness in the AGC area are determined by the AGC gain control means 16. If the brightness of the object is located in any part of the AGC area, there is a time point at which the value of the above described error signal Yd becomes 0, an AGC gain value Gx at that time point is stored and held in the AGC gain value memory means 75. That is, the exposure times of the three optimum set values at this time point are maximum values (34 Tf), the iris has a maximum value Imax (OPEN), the AGC gain becomes Gx and the imaging element 6, iris 2 and amplifier 7 operates with these values. While these values are held, the above described control signal G (see FIG. 8 (h)) is held at H level. This means that the AGC gain control means 16 is operating (the set value is determined at any point in a section A of the time chart shown in FIG. 8).

Next, when the brightness of the object is in the area of IRIS, control is started by pressing the mode switching button 12 and the start signal and initial value or the like are set as described above, but in the area of AGC, the error signal Yd (= Y-Ys) obtained from the comparison means 15 is Yd>0, that is, Y>Ys, and therefore this control area needs to be surpassed and changed to the next control area of IRIS. The turning point at which the area of AGC is switched to the area of IRIS can be found by detecting a time point at which the AGC gain value becomes a minimum value (0 dB) as shown in FIG. 9. Reference numeral 76 in FIG. 6 denotes minimum gain judging means, which generates a control signal for surpassing the area of AGC and entering the control area of the area of IRIS. According to the control method in the AGC area, control is performed such that an optimum value of the AGC gain value is calculated in the period of the exposure time maximum value (34 Tf) as described above, and therefore control is performed in a direction in which the gain value is reduced. Even when the gain is reduced, Y>Ys, and therefore after several control cycles, a time point appears at which the AGC gain value from the third subtraction means 73 in the AGC gain control means 16 becomes a minimum value. The minimum gain judging means 76 detects the time point at which the minimum value is reached and generates a gain minimum value arrival signal as shown in FIG. 8 (b). This signal is supplied to a reset input R of the flip flop 94 and OR gate 95 of the selection signal generating means 17 shown in FIG. 7 via a signal line 80. Therefore, the flip flop 94 is reset and the control signal G shown in FIG. 8 (h) is obtained at the output Q, and when this signal becomes L level, the control by the AGC gain control means 16 is stopped and as described above, the gain minimum value stored in the AGC gain value memory means 75 is supplied to the amplifier 7 including the AGC circuit from this time point onward. This gain minimum value arrival signal is passed through the OR gate 95 and also supplied to the set input S of the flip flop 97, and therefore a control signal I shown in FIG. 8(h) is obtained at the output Q of the flip flop 97. This control signal I is supplied to the iris value memory means 55 and iris correction value calculation means 50 in the iris control means 19. For a period during which this control signal I is at H level, these means operate, the gain correction value as the output of the iris correction value calculation means 50 is held to a zero value for a period during which this control signal I is at L level and the AGC gain value memory means 55 holds the final memory value (minimum value) at the end of the operation. That is, the AGC gain value memory means 55 holds the memory value at the time that the control signal I changes from the H level to L level. In this way, the period during which the control signal I is at H level corresponds to the period during which the iris control means 19 is operating.

During this operation period, if the brightness of the object is at some position in the IRIS area, there is a time point at which the value of the above described error signal Yd becomes 0 and an iris value Ix at that time point is stored and held by the iris value memory means 55. That is, for the three optimum set values at this time point, the exposure time becomes a maximum value (34 Tf), the iris is Ix, the AGC gain becomes a minimum value (0 dB) and the imaging element 6, iris 2 and amplifier 7 operate with these values.

While these values are held, the above described control signal I (see FIG. 8 (i)) is held at H level, which means that the iris control means 19 is operating (the set value is determined at some position in section B in the time chart shown in FIG. 8).

Next, when the brightness of the object is in the STC area (see FIG. 9 and FIG. 10) 121, the control is started by pressing the mode switching button 12, the start signal and initial value are set as shown above, but since the error signal Yd (= Y-Ys) obtained from the comparison means 15 is Yd>0, that is, Y>Ys in the AGC area 123 and IRIS area 122, and therefore these areas are passed. At a turning point at which the AGC area 123 is surpassed and the IRIS area 122 is switched to the STC area 121, a point at which the iris value becomes Ist (Fr.s) (point b) as shown in FIG. 9 may be detected. The first iris value judging means 57 in FIG. 5 is intended to detect a point at which the iris value becomes Ist (Fr.s) (point b).

According to the control method in the IRIS area 122, control is performed such that an optimum value of the iris value is determined in a period corresponding to an exposure time maximum value (34 Tf) as described above, and therefore the control is performed in a direction in which the iris value is reduced. Even when the iris value is reduced, Y>Ys, and therefore after several control cycles, a time point appears at which the iris value from the second subtraction means 53 at the iris control means 19 becomes Ist (Fr.s) . The first iris value judging means 57 detects a time point at which the iris value becomes Ist (Fr.s) and generates an iris value Ist (point b) arrival signal as shown in FIG. 8 (c). This arrival signal is supplied to the OR gate 96 of the selection signal generating means 17 shown in FIG. 7 via the signal line 64. Furthermore, this arrival signal is passed through the OR gate 96 and supplied to the reset input R of the flip flop 97, and therefore the flip flop 97 is reset and the control signal I shown in FIG. 8(i) is obtained at the output Q. When this signal becomes L level, the control by the iris control means 19 is stopped and as described above, the iris value Ist (Fr.s) stored in the iris value memory means 55 is supplied to the iris mechanism driver 20 from this time point onward. On the other hand, the control signal G which is the output Q of the flip flop 94 shown in FIGS. 8 (h) and (i) and control signal I which is the output Q of the flip flop 97 are supplied to the NOR gate 98 in the selection signal generating means 17. Therefore, a control signal P shown in FIG. 8(j) is obtained at the output of the NOR gate 98. This control signal P is supplied to the exposure memory means 35 and exposure correction value calculation means 31 in the imaging element control means 18 via a signal line 90. These means operate for a period during which this control signal P is at H level, the exposure time correction value as the output of the exposure correction value calculation means 31 is held to a zero value for an L level period and the exposure memory means 35 holds the last memory value (minimum value) at the end of the operation. That is, the exposure memory means 35 holds the memory value at a time point at which the control signal P is changed from H level to L level. The period during which the control signal P is at H level corresponds to a period during which the imaging element control means 18 is operating.

During this operation period, if the brightness of the object is at some position in the STC area, there is a time point at which the value of the above described error signal Yd becomes zero and the exposure time mxTf at that time point is stored and held in the exposure memory means 35. That is, for the three optimum set values at this time point, the exposure time is mxTf, the iris value is Ist (Fr.s), the AGC gain becomes a minimum value (0 dB) and the imaging element 6, iris 2 and amplifier 7 operate with these values. While these values are held, the above described control signal P (see FIG. 8(j)) is held at H level. This means that the imaging element control means 18 is operating (the set value is determined at some position in a section C of the time chart shown in FIG. 8).

Next, when the brightness of the object is in the ALC area (see FIG. 9 and FIG. 10) 120, the control is started by pressing the mode switching button 12, the start signal and initial value are set as shown above, but since the error signal Yd (= Y-Ys) obtained from the comparison means 15 is Yd>0, that is, Y>Ys in the AGC area 123, IRIS area 122 and STC area 121, and therefore these areas are passed through the control of the control areas. At a turning point at which the AGC area 123 and IRIS area 122 are surpassed and the STC area 121 is switched to the ALC area 120, a point at which the exposure time becomes a minimum value (1 Tf) may be detected as shown in FIG. 9. The minimum exposure judging means 36 in FIG. 4 is the exposure time minimum value (1 Tf) judging means for generating a control signal for surpassing the STC area 121 and switching to the control area of the ALC area 120. According to the control method in the STC area 121, control is performed such that an optimum value of the exposure time is determined by changing the exposure time from the exposure time maximum value (34 Tf) to the minimum value (1 Tf) as described above, and therefore the control is performed in a direction in which the exposure time is reduced in the bright direction. When the brightness is in the ALC area 120, Y>Ys in the state of control of the STC area 121, that is, state of control by the imaging element control means 18, and therefore after several control cycles, a time point appears at which the exposure time obtained from the first subtraction means 33 of the imaging element control means 18 becomes a minimum value (1 Tf). The minimum exposure judging means 36 detects the time point at which the exposure time becomes the minimum value (1 Tf) and generates an exposure time minimum value (1 Tf) arrival signal as shown in FIG. 8 (d) . This arrival signal is supplied to the OR gate 95 of the (control means selection control signal generating means) selection signal generating means 17 shown in FIG. 7 via a signal line 42. Furthermore, this arrival signal is passed through the OR gate 95 and supplied to the set input S of the flip flop 97, and therefore, the flip flop 97 is set, and the control signal I shown in FIG. 8(i) which becomes H level when this arrival signal is supplied is obtained at the output Q. The control signal G which is the output Q of the flip flop 94 shown in FIGS. 8(h) and (i) and control signal I which is the output Q of the flip flop 97 are supplied to the NOR gate 98 of the selection signal generating means 17.

Therefore, a control signal P shown in FIG. 8(j) is obtained at the output of the NOR gate 98. This control signal P is supplied to the exposure memory means 35 and exposure correction value calculation means 31 in the imaging element control means 18 via the signal line 90. For the period during which this control signal P is at H level, these means operate and for the period during which this control signal P is at L level, the exposure time correction value of the exposure correction value calculation means 31 as the output is held to a zero value and the exposure memory means 35 holds the last memory value (minimum value) at the end of operation and the control of the imaging element control means 18 is stopped.

That is, when the ALC area 120 is started, the exposure time becomes a minimum value (1 Tf). On the other hand, the control signal I becomes H level again at this time point as described above, and therefore the iris control means 19 operates.

When operation starts and the brightness of the object is at some position in the ALC area 120, there is a time point at which the value of the above described error signal Yd becomes zero and an iris value Iy at that time point is stored and held in the iris value memory means 35. That is, for the three optimum set values at this time point, the exposure time is a minimum value (1 Tf), iris is Iy and AGC gain is a minimum value (0 dB) and the imaging element 6, iris 2 and amplifier 7 operate with these values. While these values are held, the above described control signal I (see FIG. 8(i)) is held at H level. This means that the iris control means 19 is operating for the period corresponding to the H level (the set value is determined at some position in a section D of the time chart shown in FIG. 8).

Next, when the brightness of the object is very bright and the iris, that is, the aperture is narrowed to a maximum (when the aperture diameter is a minimum), the iris value remains Imin (the aperture diameter is a minimum) no matter how bright it may be. Reference numeral 56 in the iris control means 19 in FIG. 5 denotes minimum iris value judging means which detects that this iris value has become Imin. When the brightness of the object is very bright, control is performed such that the aperture diameter, that is, the iris value I is reduced.

Therefore, the iris value obtained from the second subtraction means 53 in the iris control means 19 decreases and finally a time point appears at which the iris value becomes Imin. This time point is detected by the minimum iris value judging means 56, the control signal obtained is supplied to the iris value memory means 55 and the iris value memory means 55 stores and holds this Imin.

As shown above, no matter in which area of ALC, STC, IRIS, AGC the brightness (illuminance) of the object is located, if the image-taking mode is switched to a high-sensitivity image-taking mode and that image-taking mode is set, an optimum exposure time, iris value and AGC gain value which match the brightness are calculated, the values are stored in memory and held, and image taking is performed under an optimum condition.

However, when image taking is realized in the high-sensitivity image-taking mode and under an optimum condition, if the brightness around changes suddenly or when the place of image taking is changed from indoors to outdoors, or vice versa, the brightness of the object changes.

When the brightness around is brighter than the brightness with the three optimum set values which are currently set in memory, if control of the change from the above described dark state to bright state, that is, a calculation of subtracting a correction value from the value one cycle ahead through the subtraction means of each control means in each control area is performed, the three optimum set values under the changed and brighter condition are obtained.

On the contrary, if control of the change from the above described bright state to dark state, that is, a calculation of adding a correction value to the value one cycle ahead through the addition means of each control means in each control area is performed, the three optimum set values under the changed and darker condition are obtained.

When the set value is stored in memory and the imaging element 6, iris 2 and amplifier 7 are operated under that new image taking condition, it is possible to realize optimum image taking in the new environment.

The control when this change from a bright condition to a dark condition takes place will be explained using drawings of an actual operation.

Suppose that the current state is at some position of the ALC area 120 in FIG. 9 and an optimum condition is set in that condition. In such a case, the iris control means 19 is operating as described above, and therefore a setting is made at some position in the section D in the time chart shown in FIG. 8. If it becomes darker than the current brightness in this area, the iris value is small, and therefore the brightness signal component value Y drops and becomes smaller than the reference value Ys of the brightness signal component. For example, suppose the value of the current iris value I is Ir and the value of Y becomes Ys/4 when a dark situation is set in this condition, it is possible to set the iris value to 4 Ir so as to make Y equal to Ys in this dark condition. Setting a double value in terms of aperture diameter causes the incoming light quantity to become equal, and therefore the value becomes a set value when it becomes dark. As described above, this set value can be obtained by calculating the iris correction value from the iris correction value calculation means 50 in the iris control means 19 and preceding period iris value from the iris value memory means through the second addition means 54.

This is the control and optimum value setting method when it becomes dark in the area of ALC. Next, suppose the current state is at some position in the ALC area 120 in FIG. 9 and an optimum condition is set in that situation. When the brightness is suddenly changed (darkened) from that condition to some position in the STC area 121. In this case, in the ALC area 120, since Y<Ys, the iris value I increases and finally it reaches Ist (point a) on the boundary (dotted line 131) between the ALC area 120 and STC area 121 shown in FIG. 9. Second iris value judging means 59 in the iris control means 19 shown in FIG. 5 detects a time point at which the iris value reaches the above described Ist (point a). When the iris value obtained from the second addition means 54 reaches Ist, the second iris value judging means 59 obtains an iris value Ist (point a) arrival signal shown in FIG. 8(e). This signal is supplied to the OR gate 96 in (control means selection control signal generating means) selection signal generating means 17 via a signal line 63. This signal passes through the OR gate 96 and is supplied to the reset input R of the flip flop 97, and therefore the flip flop 97 is reset and the control signal I shown in FIG. 8 (i) is obtained at the output Q. When the iris value Ist (point a) arrival signal shown in FIG. 8 (e) is supplied to the selection signal generating means 17, the operation of the iris control means 19 is stopped (section D in FIG. 8 ends) and the iris value memory means 55 holds the above described iris value Ist. On the other hand, the control signal P shown in FIG. 8 (j) is obtained from the NOR gate 98 of the selection signal generating means 17 and this signal is supplied to the imaging element control means 18. Therefore, the STC area, that is, the control (section E in FIG. 8) by the imaging element control means 18 starts from the time point at which the above described arrival signal is issued. Assuming that the brightness is located at some position in the STC area, control is performed such that the exposure time $m \cdot Tf$ is increased until the exposure time that matches the brightness is obtained. As described above, when the control enters the STC area 121, the exposure time starts from 1 Tf as shown in FIG. 9 (position of dotted line 131). For example, if the brightness of the current object is assumed to be at the position of the dotted line 146, the brightness signal component value Y at the position of the dotted line 131 becomes the value of Yb shown by reference numeral 148. Furthermore, reference numeral 147 denotes a reference value Yso of the brightness signal component at this position and Yso = Yh. The error signal Yd at this position is Y = Yb<Ys = Yso = Yh, and therefore Yd (= Y-Ys) <0, and the exposure time correction value $\Delta m \cdot Tf$ in the preceding period obtained from the exposure correction value calculation means 31 in the imaging element control means 18 for every $M \cdot Tf$ period passes through the terminal a(-) of the first switching means and is supplied to the first addition means 34. The exposure time $m \cdot Tf$ in the preceding period from the exposure memory means 35 is also supplied to the first addition means 34. Therefore, exposure time $m \cdot Tf + \Delta m \cdot Tf$ in the next period, which is the sum of both values, is obtained. In this way, as the control period is repeated several times, Y increase along a curve 145 shown in FIG. 10. (Though this is shown continuously, Y increases along the curve periodically and discretely). Finally, when Y = Ys = Ysc, that is, when the error signal Yd approximates to zero, the first judging means 30 detects Yd = 0 and the exposure memory means 35 stores and holds the value of exposure time at that time. In this way, a set value corresponding to the brightness of the object is determined and optimum image taking can be realized.

This is the method for obtaining a set value that matches the new situation when the brightness of the object which has been set to an optimum set value in the ALC area 120 is switched to a dark situation of STC area 121.

Furthermore, a case where the brightness of the object is further changed to a dark area situation will be explained.

Since the method of calculating an optimum set value in each area is easily understandable from the explanations so far, only the method of changing from one area to another will be explained.

When the brightness of the object is suddenly changed from the ALC area 120 to the IRIS area 122, control must be shifted from the ALC area 120 through STC area 121 to the IRIS area 122. The method of shifting from the ALC area 120 to the STC area 121 has been described above. The control of the STC area 121 has also been explained.

In this case, since Y<Ys in the STC area 121, the exposure time increases and reaches a maximum value. A dotted line 140 in FIG. 9 denotes the position of brightness of the maximum exposure time value and indicates a boundary position at which the STC area 121 transitions to the IRIS area 122.

Maximum exposure judging means 37 in the imaging element control means 18 in FIG. 4 detects a time point at which the exposure time periodically obtained from the first addition means 34 reaches a maximum value (34 Tf) and generates a control signal at that time point. An exposure time maximum value arrival signal shown in FIG. 8 (f) is obtained from the maximum exposure judging means 37 and supplied to the OR gate 95 of the selection signal generating means 17 shown in FIG. 7 via a signal line 43. This signal passes through the OR gate 95 and is added to the set input S of the flip flop 97, and therefore a control signal I as shown in FIG. 8(i) is obtained at the output Q. As described above, this signal is added to the iris control means 19, and therefore the control by the iris control means 19 starts from the time point at which the above described arrival signal is generated. The control of a section F in FIG. 8 is performed. The method of obtaining an optimum set value by the iris control means 19 is the same as that explained so far.

When the object is placed in the dark AGC area 123, the time point at which the iris value reaches a maximum value (position indicated by a dotted line 141 in FIG. 9) is detected and the AGC gain control means 16 may be operated from that time point. The maximum iris value judging means 58 of the iris control means 19 in FIG. 5 detects the time point at which the iris value obtained from the second addition means 54 reaches a maximum value. An iris maximum value arrival signal shown in FIG. 8 (g) is obtained from the maximum iris value judging means 58. This signal is supplied to the OR gate 93 of the selection signal generating means 17 shown in FIG. 7 via the signal line 62. Since this signal is passed through the OR gate 93 and added to the set input S of the flip flop 94, a control signal G shown in FIG. 8 (h) is obtained at the output Q. Since the control signal G is supplied to the AGC gain control means 16, this and subsequent areas become areas under the control of the AGC gain control means 16. The control of the AGC gain control means 16 is control to obtain an optimum set value where Y = Ys = Y1 and the same as described above.

Finally, in a completely dark situation, there is no brightness signal component value Y, and therefore Y<Ys and the AGC gain value obtained from the third addition means 72 in the AGC gain control means 16 in FIG. 6 increases up to a maximum value. When the AGC gain value reaches a maximum value, maximum gain judging means 77 generates a control signal of arrival of the maximum value at that time point. The maximum value arrival control signal from the maximum gain judging means 77 is added to the AGC gain value memory means 75 and the AGC gain maximum value is stored and held. The set value in this condition is the same as the initial set value at the control start point at which the mode is switched to the high-sensitivity image-taking mode.

When this device is brought from this state to a bright state again, an optimum set value is obtained if the control in the above described bright direction is performed. In short, when this device is changed from the normal image-taking mode to the high-sensitivity image-taking mode, it is possible to obtain an optimum set value in any bright situation, hold the set value and realize image taking. Moreover, when the device is moved from that setting condition to a situation with different brightness or when the place of image taking remains the same and only the brightness changes, it is possible to automatically transition to a set value suited to the brightness.

The above described embodiments have shown the components with hardware using circuit blocks, but the imaging control means 25 in FIG. 1 may also be constructed of one microcomputer. In this case, the operations of the respective blocks are expressed with a program. Furthermore, initial set values and brightness signal reference values or the like are preset in an internal ROM.

When the present invention is used for not only a video camera but also a device furnished with imaging means such as a digital still camera, it is possible to obtain effects similar to those of the present invention.

**Claims**

**1.** An image processing device provided with a first image-taking mode used in a bright environment and a second image-taking mode used in a dark environment, comprising:

an iris for controlling a light quantity of an optical signal coming from outside;
an imaging element for outputting the optical signal from said iris as a video signal;
gain control means for performing gain control over the video signal from said imaging element;
signal processing means for signal-processing the output signal from said gain control means; and
imaging control means for controlling an opening degree of said iris, an exposure time of said imaging element and an amount of gain of said gain control means based on the video signal from said signal processing means,

wherein said imaging control means judges surrounding brightness based on the video signal from said signal processing means in the second image-taking mode and changes the exposure time in said imaging element in accordance with the brightness.

2. The image processing device according to claim 1, wherein the imaging control means controls over the opening degree of the iris when the surrounding brightness is brighter than a predetermined value and when the surrounding brightness is darker than the predetermined value.

3. The image processing device according to claim 1, wherein the imaging control means controls an amount of gain of the gain control means when the surrounding brightness is darker than a predetermined value.

4. An image processing device which forms an automatic search control loop whose period consists of M·Tf (= m·Tf+n·Tf, M: 1 and even number of 2 or greater) combining an electronic shutter ON-time m·Tf (m: positive number, Tf: 1-field period) and OFF-time n·Tf (n: positive number of 0 to 2), obtains and holds an exposure time corresponding to an imaging element which matches the brightness of an object, an iris value corresponding to an iris and an AGC gain value corresponding to an amplifier so as to set an optimum image taking condition.

5. An image processing device which enables image taking in a dark environment by setting an electronic shutter-ON time which is an exposure time of an imaging element to an m·Tf (m: positive number) period within a period M·Tf (M: 1 and even number of 2 or greater, Tf: 1-field period), comprising:

an imaging element made up of an imaging surface consisting of photoelectrical conversion elements for converting light to charge, an accumulation section for accumulating the charge generated from said photoelectrical conversion element and a charge transfer element for transferring the accumulated charge in vertical and horizontal directions and obtaining an image signal, said imaging element consecutively changing said exposure time m·Tf in a period M·Tf and automatically setting m·Tf to an optimum exposure time while maintaining a relationship:

$$M \cdot Tf = m \cdot Tf + n \cdot Tf$$

where n·Tf (n: positive number of 0 to 2) is an electronic shutter-OFF time;
a lens unit made up of a lens for forming an object image on the imaging surface of said imaging element and an iris or the like;
an imaging element driver which performs electronic shutter-ON drive control for accumulating charge from said charge transfer element in said accumulation section for said electronic shutter-ON time m·Tf, discharge drive control for discharging the charge from said accumulation section for said electronic shutter-OFF time n·Tf and drive control for extracting an image signal of a last 1 field obtained for every said period M·Tf through vertical and horizontal transfers of said charge transfer element accumulated for said m·Tf time;
an amplifier which amplifies the image signal obtained from said imaging element through driving of said imaging element driver;
a signal processing circuit which signal-processes the image signal obtained from said amplifier to obtain a video signal made up of a brightness signal and color signal;
brightness detecting means for integrating said brightness signal indicating the light quantity value entering said imaging surface during said electronic shutter-ON time m·Tf for the last 1-field period of said exposure period and detecting the input light quantity value corresponding to the brightness of the object;
brightness reference setting means for setting a reference value of a brightness signal component corresponding to the brightness;
comparison means for comparing a brightness signal component value obtained from said brightness detecting means with the reference value of the brightness signal component from said brightness reference setting means and obtaining an error signal between both signals for every period M·Tf; and
imaging element control means,

wherein said imaging element control means comprises:

exposure memory means for storing the electronic shutter-ON time m·Tf set for every period M·Tf in memory;
exposure time calculation means for subjecting an exposure time correction amount Δm-1·Tf obtained through a calculation based on said error signal obtained 1 period ahead (M-1·Tf period) in a current period (M0·Tf period) during an electronic shutter-ON time m-1·Tf stored in the exposure memory means 1 period ahead (M-1·Tf period) of the current period (M0·Tf period) to addition or subtraction calculation processing according to the sign of said error signal and calculating an electronic shutter-ON time m1·Tf (= m-1·Tf±∆m-1·Tf) in the next period (M1·Tf period); and

control signal generating means for storing said electronic shutter-ON time m1·Tf in said exposure memory means and generating a second control signal for extracting a 1-field image signal obtained by accumulating an electronic shutter-ON time supplied to said imaging element driver based on said electronic shutter-ON time m1·Tf and storing a first control signal indicating an electronic shutter-OFF period, and

first and second control signals generated based on said electronic shutter-ON time m·Tf from said control signal generating means are supplied to said imaging element driver, a feedback control loop is thereby formed during an M·Tf period, said electronic shutter-ON time m·Tf is changed and said electronic shutter-ON time (exposure time) m·Tf at a time point at which said error signal becomes zero or approximates to zero is held to thereby obtain a video signal under an optimum exposure condition.

6. The image processing device according to claim 5, further comprising:

memory means for obtaining a continuous video signal from said signal processing circuit by fixing the electronic shutter-ON time from the imaging element control means to a period 1 Tf in a normal image-taking mode and converting a 1-field video signal obtained periodically for every period M·Tf from said signal processing circuit to a continuous video signal in said high-sensitivity image-taking mode;

switch means for selecting a moving image video signal from said signal processing circuit in the normal image-taking mode and a video signal from said memory means in the high-sensitivity image-taking mode;

a mode switching button for generating a command signal for switching between said modes; and

mode signal generating means for generating a control signal for receiving the command signal from said mode switching button and changing said switch means and a control signal for changing the setting of said imaging element control means according to the mode.

7. The image processing device according to claim 5 or 6, wherein said brightness reference setting means comprises a data table of reference values of said brightness signal component indicating a reference of the brightness corresponding to an exposure time m·Tf,

the electronic shutter-ON time m·Tf stored in said exposure memory means is supplied to said brightness reference setting means;

a reference value of the brightness signal component corresponding to said exposure time m·Tf is selected from said data table,

the selected reference value of the brightness signal component and said brightness signal component value obtained from said brightness detecting means are supplied to said comparison means, and

an error signal between both signals is obtained.

8. The image processing device according to claim 5 or 6, wherein said imaging element control means comprises maximum exposure judging means and minimum exposure judging means for generating a control signal when the electronic shutter-ON time (exposure time) m·Tf stored in said exposure memory means becomes a maximum value and minimum value,

said amplifier is made up of an AGC circuit or the like,

said image processing device further comprising: AGC gain control means comprising AGC gain value memory means for storing a gain value of said AGC circuit for every said period M·Tf (M is a maximum value), gain calculation means for obtaining an AGC gain value G1 (= G-1±∆G) in the next period by performing a subtraction or addition between an AGC gain correction value ∆G obtained through calculation processing based on said error signal obtained from said comparison means and an AGC gain value G-1 stored in said memory means in the preceding period at a time point (current period) at which said correction value is obtained in accordance with the sign of said error signal and minimum gain judging means for storing said AGC gain value G1 in said memory means, storing an AGC gain value for every period M·Tf (M is a maximum value) and generating a control signal when the AGC gain value G stored in said memory means becomes a minimum value;

an iris mechanism driver for driving said iris mechanism which mechanically controls an input light quantity;

iris control means comprising iris value memory means for storing an iris value given to said iris mechanism for every said period M.Tf (M is a maximum value), iris value calculation means for obtaining an iris value I1 (= I-1±∆1) in the next period by executing a subtraction or addition between an iris correction value ∆I obtained

through calculation processing based on said error signal obtained by said comparison means and an iris value I-1 obtained from said iris value memory means in the preceding period at a time point (current period) at which said correction value is obtained according to the sign of said error signal and iris value judging means including iris value minimum value judging means and iris value specific value judging means for adding said iris value I1 to said iris value memory means, storing an iris value for every M·Tf (M is a maximum value) period in memory, judging whether the iris value I stored in said iris value memory means (I) is a minimum value or judging the value when the iris value becomes a specific value and generating a control signal, for controlling the brightness exceeding the range controlled by said gain control means up to the range controlled by said imaging element control means and a bright range (control for period 1 Tf) outside the control range of said imaging element control means; and

selection signal generating means for generating a control signal for determining a period of operating said imaging element control means or said AGC gain control means or said iris control means using a control signal generated when a maximum value, minimum value and specific value stored in the respective memory means in accordance with the input light quantity are reached at said respective control means,

wherein a control loop is formed by supplying an AGC gain value G stored in said AGC gain value memory means of said gain control means to an AGC amplifier of said amplifier, an iris value I stored in said iris value memory means is supplied to said iris mechanism driver, a control loop is formed by setting an iris value, said selection signal generating means changes an operation period of said AGC gain control means, said iris control means and said imaging element control means according to the brightness, and when said error signal at any one control means in operation approximates to a zero value, memory means provided for the control means holds the value, sets an optimum image taking condition and obtains a clear video signal over the entire area of the brightness.

9. The image processing device according to claim 5 or 6, wherein said brightness reference setting means includes a data table of reference values of said brightness signal component indicating a reference of the brightness corresponding to an exposure time m·Tf, the exposure time m·Tf stored by said exposure memory means is supplied to said brightness reference setting means, a reference value of the brightness signal component corresponding to said exposure time m·Tf is selected from said data table and the selected reference value of the brightness signal component and said brightness signal component value obtained from said brightness detecting means are supplied to said comparison means so as to obtain an error signal between both signals,
said imaging element control means comprises maximum exposure judging means and minimum exposure judging means for generating a control signal when the electronic shutter-ON time (exposure time) m·Tf stored in said exposure memory means becomes a maximum value and minimum value,
said amplifier is made up of an AGC circuit or the like,
said image processing device further comprising:

AGC gain control means comprising AGC gain value memory means for storing a gain value of said AGC circuit for every said period M·Tf (M is a maximum value), gain calculation means for obtaining an AGC gain value G1 (= G-1 ± ΔG) in the next period by performing a subtraction or addition between an AGC gain correction value ΔG obtained through calculation processing based on said error signal obtained from said comparison means and an AGC gain value G-1 stored in said memory means in the preceding period at a time point (current period) at which said correction value is obtained in accordance with the sign of said error signal and minimum gain judging means for storing said AGC gain value G1 in said memory means, storing an AGC gain value for every period M·Tf (M is a maximum value) and generating a control signal when the AGC gain value G stored in said memory means becomes a minimum value;
an iris mechanism driver for driving said iris mechanism which mechanically controls an input light quantity;
iris control means comprising iris value memory means for storing an iris value given to said iris mechanism for every said period M·Tf (M is a maximum value), iris value calculation means for obtaining an iris value I1 (= I-1 ± ΔI) in the next period by executing a subtraction or addition between an iris correction value ΔI obtained through calculation processing based on said error signal obtained by said comparison means and an iris value I-1 obtained from said iris value memory means in the preceding period at a time point (current period) at which said correction value is obtained according to the sign of said error signal and iris value judging means including iris value minimum value judging means and iris value specific value judging means for adding said iris value I1 to said iris value memory means, storing an iris value for every M·Tf (M is a maximum value) period in memory, judging whether the iris value I stored in said iris value memory means (I) is a minimum value or judging the value when the iris value becomes a specific value and generating a control signal, for controlling the brightness exceeding the range controlled by said gain control means up to the range controlled by said imaging element control means and a bright range (control for period 1 Tf) outside the control range of said imaging element control means; and

selection signal generating means for generating a control signal for determining a period of operating said imaging element control means or said AGC gain control means or said iris control means using a control signal generated when a maximum value, minimum value and specific value stored in the respective memory means in accordance with the input light quantity are reached at said respective control means,

wherein a control loop is formed by supplying an AGC gain value G stored in said AGC gain value memory means of said gain control means to an AGC amplifier of said amplifier, an iris value I stored in said iris value memory means is supplied to said iris mechanism driver, a control loop is formed by setting an iris value, said selection signal generating means changes an operation period of said AGC gain control means, said iris control means and said imaging element control means according to the brightness, and when said error signal at any one control means in operation approximates to a zero value, memory means provided for the control means holds the value, sets an optimum image taking condition and obtains a clear video signal over the entire area of the brightness.

**10.** The image processing device according to claim 5 or 6, wherein said imaging element control means comprises maximum exposure judging means and minimum exposure judging means for generating a control signal when the electronic shutter-ON time (exposure time) m·Tf stored in said exposure memory means becomes a maximum value and minimum value,

said amplifier is made up of an AGC circuit or the like,

said image processing device further comprising:

AGC gain control means comprising AGC gain value memory means for storing a gain value of said AGC circuit for every said period M·Tf (M is a maximum value), gain calculation means for obtaining an AGC gain value G1 (= G-1±ΔG) in the next period by performing a subtraction or addition between an AGC gain correction value ΔG obtained through calculation processing based on said error signal obtained from said comparison means and an AGC gain value G-1 stored in said memory means in the preceding period at a time point (current period) at which said correction value is obtained in accordance with the sign of said error signal and minimum gain judging means for storing said AGC gain value G1 in said memory means, storing an AGC gain value for every period M·Tf (M is a maximum value) and generating a control signal when the AGC gain value G stored in said memory means becomes a minimum value;

an iris mechanism driver for driving said iris mechanism which mechanically controls an input light quantity;

iris control means comprising iris value memory means for storing an iris value given to said iris mechanism for every said period M·Tf (M is a maximum value), iris value calculation means for obtaining an iris value I1 (= I-1±ΔI) in the next period by executing a subtraction or addition between an iris correction value ΔI obtained through calculation processing based on said error signal obtained by said comparison means and an iris value I-1 obtained from said iris value memory means in the preceding period at a time point (current period) at which said correction value is obtained according to the sign of said error signal and iris value judging means including iris value minimum value judging means and iris value specific value judging means for adding said iris value I1 to said iris value memory means, storing an iris value for every M·Tf (M is a maximum value) period in memory, judging whether the iris value I stored in said iris value memory means (I) is a minimum value or judging the value when the iris value becomes a specific value and generating a control signal, for controlling the brightness exceeding the range controlled by said gain control means up to the range controlled by said imaging element control means and a bright range (control for period 1 Tf) outside the control range of said imaging element control means; and

selection signal generatingmeans for generating a control signal for determining a period of operating said imaging element control means or said AGC gain control means or said iris control means using a control signal generated when a maximum value, minimum value and specific value stored in the respective memory means in accordance with the input light quantity are reached at said respective control means,

wherein a control loop is formed by supplying an AGC gain value G stored in said AGC gain value memory means of said gain control means to an AGC amplifier of said amplifier, an iris value I stored in said iris value memory means is supplied to said iris mechanism driver, a control loop is formed by setting an iris value, said selection signal generating means changes an operation period of said AGC gain control means, said iris control means and said imaging element control means according to the brightness, and when said error signal at any one control means in operation approximates to a zero value, memory means provided for the control means holds the value, sets an optimum image taking condition and obtains a clear video signal over the entire area of the brightness, and

said mode signal generating means comprises:

a data table for setting the electronic shutter-ON time to a maximum value for said imaging element control means, the AGC gain to a maximum value for said gain control means and the iris value to a minimum value for said iris control means; and

generating means for generating a control means selection start signal for said selection signal generating means,

wherein when a command signal of said mode switching button is received and the normal image-taking mode is switched to the high-sensitivity image-taking mode, the values of said data table are supplied to said respective control means and a start signal is supplied to said selection signal generating means and control is started from said gain control means so as to converge to an optimum exposure condition.

**11.** The image processing device according to claim 5 or 6, wherein said brightness reference setting means includes a data table of reference values of said brightness signal component indicating a reference of the brightness corresponding to an exposure time $m \cdot Tf$, the exposure time $m \cdot Tf$ stored by said exposure memory means is supplied to said brightness reference setting means, a reference value of the brightness signal component corresponding to said exposure time $m \cdot Tf$ is selected from said data table and the selected reference value of the brightness signal component and said brightness signal component value obtained from said brightness detecting means are supplied to said comparison means so as to obtain an error signal between both signals,

said imaging element control means comprises maximum exposure judging means and minimum exposure judging means for generating a control signal when the electronic shutter-ON time (exposure time) $m \cdot Tf$ stored in said exposure memory means becomes a maximum value and minimum value,

said amplifier is made up of an AGC circuit or the like,

said image processing device further comprising:

AGC gain control means comprising AGC gain value memory means for storing a gain value of said AGC circuit for every said period $M \cdot Tf$ (M is a maximum value), gain calculation means for obtaining an AGC gain value G1 ($= G-1 \pm \Delta G$) in the next period by performing a subtraction or addition between an AGC gain correction value $\Delta G$ obtained through calculation processing based on said error signal obtained from said comparison means and an AGC gain value G-1 stored in said memory means in the preceding period at a time point (current period) at which said correction value is obtained in accordance with the sign of said error signal and minimum gain judging means for storing said AGC gain value G1 in said memory means, storing an AGC gain value for every period $M \cdot Tf$ (M is a maximum value) and generating a control signal when the AGC gain value G stored in said memory means becomes a minimum value;

an iris mechanism driver for driving said iris mechanism which mechanically controls an input light quantity;

iris control means comprising iris value memory means for storing an iris value given to said iris mechanism for every said period $M \cdot Tf$ (M is a maximum value), iris value calculation means for obtaining an iris value I1 ($= I-1 \pm \Delta 1$) in the next period by executing a subtraction or addition between an iris correction value $\Delta I$ obtained through calculation processing based on said error signal obtained by said comparison means and an iris value I-1 obtained from said iris value memory means in the preceding period at a time point (current period) at which said correction value is obtained according to the sign of said error signal and iris value judging means including iris value minimum value judging means and iris value specific value judging means for adding said iris value I1 to said iris value memory means, storing an iris value for every $M \cdot Tf$ (M is a maximum value) period in memory, judging whether the iris value I stored in said iris value memory means (I) is a minimum value or judging the value when the iris value becomes a specific value and generating a control signal, for controlling the brightness exceeding the range controlled by said gain control means up to the range controlled by said imaging element control means and a bright range (control for period 1 Tf) outside the control range of said imaging element control means; and

selection signal generatingmeans for generating a control signal for determining a period of operating said imaging element control means or said AGC gain control means or said iris control means using a control signal generated when a maximum value, minimum value and specific value stored in the respective memory means in accordance with the input light quantity are reached at said respective control means,

wherein a control loop is formed by supplying an AGC gain value G stored in said AGC gain value memory means of said gain control means to an AGC amplifier of said amplifier, an iris value I stored in said iris value memory means is supplied to said iris mechanism driver, a control loop is formed by setting an iris value, said selection signal generating means changes an operation period of said AGC gain control means, said iris control means and said imaging element control means according to the brightness, and when said error signal at any one control means in operation approximates to a zero value, memory means provided for the control means holds the value, sets an optimum image taking condition and obtains a clear video signal over the entire area of the brightness, and said mode signal generating means comprises:

a data table for setting the electronic shutter-ON time to a maximum value for said imaging element control means, the AGC gain to a maximum value for said gain control means and the iris value to a minimum value for said iris control means; and

generating means for generating a control means selection start signal for said selection signal generating means,

wherein when a command signal of said mode switching button is received and the normal image-taking mode is switched to the high-sensitivity image-taking mode, the values of said data table are supplied to said respective control means and a start signal is supplied to said selection signal generating means and control is started from said gain control means so as to converge to an optimum exposure condition.

FIG. 1

FIG. 2

# FIG. 3

FIG. 4

FIG. 5

FIG. 6

FIG. 7

30

# FIG.8

CONTROL START POINT

(a) (SIGNAL LINE 99)
(b) (SIGNAL LINE 80)
(c) (SIGNAL LINE 64)
(d) (SIGNAL LINE 42)
(e) (SIGNAL LINE 63)
(f) (SIGNAL LINE 43)
(g) (SIGNAL LINE 62)

(h) (SIGNAL LINE 92)
SET TO GAIN MAXIMUM VALUE

(i) (SIGNAL LINE 91)
SET TO IRIS MAXIMUM VALUE

(j) (SIGNAL LINE 90)
SET TO EXPOSURE TIME MAXIMUM VALUE

A B C D E F G

HOLD GAIN MINIMUM VALUE

HOLD 1st (Fr. s)

HOLD 1st (Fr. s)

HOLD EXPOSURE TIME MINIMUM VALUE

HOLD EXPOSURE TIME MINIMUM VALUE

H L

FIG. 9

FIG. 10

## INTERNATIONAL SEARCH REPORT

| International application No. |
|---|
| PCT/JP2004/012886 |

| A. CLASSIFICATION OF SUBJECT MATTER |
|---|
| Int.Cl⁷ H04N5/235 |

According to International Patent Classification (IPC) or to both national classification and IPC

| B. FIELDS SEARCHED |
|---|
| Minimum documentation searched (classification system followed by classification symbols)<br>　　Int.Cl⁷　H04N5/235 |

Documentation searched other than minimum documentation to the extent that such documents are included in the fields searched

| Jitsuyo Shinan Koho | 1922-1996 | Jitsuyo Shinan Toroku Koho | 1996-2004 |
|---|---|---|---|
| Kokai Jitsuyo Shinan Koho | 1971-2004 | Toroku Jitsuyo Shinan Koho | 1994-2004 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 6-276444 A (Toshiba Corp.),<br>30 September, 1994 (30.09.94),<br>Full text; Figs. 1 to 5<br>(Family: none) | 1-3 |
| A | JP 6-261255 A (Toshiba Corp.),<br>16 September, 1994 (16.09.94),<br>Full text; Figs. 1 to 4<br>(Family: none) | 1-3 |
| A | JP 10-336516 A (Toshiba Corp.),<br>18 December, 1998 (18.12.98),<br>Full text; Figs. 1 to 6<br>(Family: none) | 1-3 |

☐ Further documents are listed in the continuation of Box C.　　☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>　　15 December, 2004 (15.12.04) | Date of mailing of the international search report<br>　　11 January, 2005 (11.01.05) |
|---|---|
| Name and mailing address of the ISA/<br>　　Japanese Patent Office | Authorized officer |
| Facsimile No. | Telephone No. |

Form PCT/ISA/210 (second sheet) (January 2004)

**INTERNATIONAL SEARCH REPORT**

International application No.

PCT/JP2004/012886

---

**Box No. II        Observations where certain claims were found unsearchable (Continuation of item 2 of first sheet)**

This international search report has not been established in respect of certain claims under Article 17(2)(a) for the following reasons:

1. ☐ Claims Nos.:
    because they relate to subject matter not required to be searched by this Authority, namely:

2. ☐ Claims Nos.:
    because they relate to parts of the international application that do not comply with the prescribed requirements to such an extent that no meaningful international search can be carried out, specifically:

3. ☐ Claims Nos.:
    because they are dependent claims and are not drafted in accordance with the second and third sentences of Rule 6.4(a).

---

**Box No. III        Observations where unity of invention is lacking (Continuation of item 3 of first sheet)**

This International Searching Authority found multiple inventions in this international application, as follows:

    I. The inventions of claims 1-3 relate to an image processing device having a first imaging mode used when it is light around and a second imaging mode used when it is dark around.  In the second imaging mode, the imaging control device judges the brightness around according to the video signal from the signal processing means and changes the exposure time in the imaging element according to the brightness.

    (Continued to extra sheet)

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.: 1-3

**Remark on Protest**        ☐  The additional search fees were accompanied by the applicant's protest.

                             ☐  No protest accompanied the payment of additional search fees.

---

Form PCT/ISA/210 (continuation of first sheet (2)) (January 2004)

**INTERNATIONAL SEARCH REPORT**

International application No.

PCT/JP2004/012866

Continuation of Box No.III of continuation of first sheet(2)

II. The inventions of claims 4-11 relate to an image processing device having an automatic search control loop with a period M·Tf (= m·Tf + n·Tf wherein M is 1 and an even number not smaller than 2) combining the ON time m·Tf (wherein m is a positive number and Tf is one field period) and the OFF time n·Tf (wherein n is a positive number from 0 to 2) of an electronic shutter and calculating/holding the exposure time for the imaging element appropriate for the brightness of the object, the iris value for the iris, and the AGC gain value for the amplifier, thereby setting an optimal imaging condition.

These two groups of inventions are not so linked as to form a single general inventive concept.

Form PCT/ISA/210 (extra sheet) (January 2004)